# EUROPEAN PATENT APPLICATION

(11) **EP 4 810 434 A1**
(43) Date of publication of application: **23.09.2026**
(21) Application number: 26163120.4
(22) Date of filing: 09.03.2026
(51) Int. Cl.: B66F 9/075, B60G 17/005, B60W 40/13

(54) **ESTIMATION METHOD, VEHICLE CONTROL DEVICE, VEHICLE, AND PROGRAM**

(30) Priority: 19.03.2025 JP 2025045413
(71) Applicant: KABUSHIKI KAISHA TOYOTA JIDOSHOKKI, Kariya-shi, Aichi 448-8671 (JP)
(72) Inventor: Hattori, Tatsuya, Aichi, 448-8671 (JP); Yamaguchi, Hiroyuki, Aichi, 480-1192 (JP); Hattori, Yoshikazu, Aichi, 480-1192 (JP); Amano, Masateru, Aichi, 480-1192 (JP)
(74) Representative: Hoffmann Eitle

(57) **Abstract**

An estimation method of estimating wheel loads applied to a plurality of wheels (14, 24) of a vehicle (1, 1A), which includes: a sprung body (10) including a vehicle body (11) and a first wheel (14) of the wheels (14, 24); an unsprung body (20) including an axle (25) and a second wheel (24) of the wheels (14, 24); a support unit (40) for supporting the vehicle body (11) and the axle (25); an actuator (30) configured to restrict rotations of the vehicle body (11) and the axle (25) in a roll direction; and a sensor (50), includes: calculating calculated values (IFvc) based on acquired motion information (IFm) relating to motion of the vehicle (1, 1A) acquired by the sensor (50); and estimating the wheel loads of the wheels (14, 24) based on the calculated values (IFvc) and a predetermined estimation formula. The calculated values (IFvc) include accelerations at respective center-of-gravity positions of the sprung body (10) and the unsprung body (20), and roll stiffness distributions of the sprung body (10) and the unsprung body (20).

## Description

The present invention relates to an estimation method, a vehicle control device, a vehicle, and a program.

### BACKGROUND ART

Japanese Patent No. 3814056 discloses a ground load control device.

The ground load control device includes an actuator for actively changing a vertical relative distance between a vehicle body and a tire, a yaw rate sensor that detects the yaw rate of a vehicle, and a lateral acceleration sensor. When the lateral acceleration decreases and it is determined, based on a yaw rate change rate calculated by differentiating the yaw rate, that one of spin, plow-out, and four-wheel drift occurs during turning of the vehicle, the ground load control device controls the actuator of a wheel to be returned from the spin, plow-out, or four-wheel drift so that the vertical relative distance increases.

Japanese Patent Application Publication No. 2022-064316 discloses a wheel load estimation device.

In the wheel load estimation device, a center-of-gravity inertia value calculation unit calculates information relating to the center of gravity of a vehicle including a load, and also calculates an inertia tensor including a moment-of-inertia coefficient and a product of inertia about the center of gravity of the vehicle. A wheel load fluctuation estimation unit estimates fluctuation amounts of wheel loads based on the inertia tensor, the angular velocities and angular accelerations of the vehicle including the load about three axes (i.e., a three-axis angular velocity and a three-axis angular acceleration), the longitudinal and lateral acceleration of the vehicle, the weight of the vehicle including the load, and the information relating to the center of gravity of the vehicle including the load, and a wheel load calculation unit calculates wheel loads based on the fluctuation amount of the wheel loads and static loads.

However, it is difficult for the devices disclosed in Japanese Patent No. 3814056 and Japanese Patent Application Publication No. 2022-064316 to estimate wheel loads of a vehicle that has two independent inertia systems, each having a roll angle.

The present invention, which has been made in light of the above-mentioned problem, is directed to providing a method of estimating wheel loads in a vehicle that has two independent inertia systems, each having a roll angle.

### SUMMARY

In accordance with an aspect of the present invention, there is provided an estimation method of estimating wheel loads applied to a plurality of wheels of a vehicle, the vehicle including a sprung body, an unsprung body, a support unit, an actuator, and a sensor, the sprung body including a vehicle body and a first wheel of the wheels, the unsprung body including an axle and a second wheel of the wheels, the vehicle body and the axle being supported by the support unit so as to be rotatable in a roll direction of the vehicle, the actuator being configured to restrict rotations of the vehicle body and the axle in the roll direction, the sensor being configured to acquire motion information relating to motion of the vehicle. The estimation method includes: calculating calculated values based on the acquired motion information, the calculated values including accelerations at respective center-of-gravity positions of the sprung body and the unsprung body, and roll stiffness distributions of the sprung body and the unsprung body; and estimating the wheel loads of the wheels based on the calculated values and a predetermined estimation formula.

In accordance with another aspect of the present invention, there is provided a vehicle control device including at least one processor. The processor is configured to execute processing by reading a program, the processing including estimating the wheel loads by executing computational processing based on the estimation method.

In accordance with another aspect of the present invention, there is provided a vehicle comprising the vehicle control device.

In accordance with another aspect of the present invention, there is provided a program for causing a computer to execute each of the processing of the vehicle control device.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a schematic side view of a vehicle 1 of an embodiment;
FIG. 2 is a rear view of the vehicle 1 as viewed from a rear side of the vehicle;
FIG. 3 is a diagram of a configuration of an actuator 30 of the embodiment;
FIG. 4 is a block diagram of a hardware configuration of the vehicle 1;
FIG. 5 is a block diagram of a hardware configuration of a vehicle control device 100 as an example;
FIG. 6 is a diagram of a vehicle coordinate system with respect to a ground coordinate system;
FIG. 7A is a schematic side view (corresponding to FIG. 1) of the vehicle 1 for defining coordinate systems, and FIG. 7B is a schematic rear view (corresponding to FIG. 2) of the vehicle 1;
FIG. 8 is a diagram illustrating attitude angles of the vehicle coordinate system with respect to the ground coordinate system;
FIG. 9A is a schematic rear view (corresponding to FIG. 2) of the vehicle 1 for depicting constraint between a sprung body 10 and an unsprung body 20, and FIG. 9B is a schematic view of a virtual spring between the sprung body 10 and the unsprung body 20 in the rear view of the vehicle 1 for depicting constraint between a sprung body 10 and an unsprung body 20;
FIG. 10A is a schematic side view (corresponding to FIG. 1) of the vehicle 1 for depicting constraint between the sprung body 10 and the unsprung body 20, and FIG. 10B is a schematic view of virtual springs between the sprung body 10 and the unsprung body 20 in the side view of the vehicle 1;
FIG. 11 is a table of symbols used in a calculation method and an estimation method of the embodiment;
FIG. 12 is a table of symbols used in the calculation method and the estimation method of the embodiment;
FIG. 13A is a table of parameters treated as constants, and FIG. 13B is a schematic rear view (corresponding to FIG. 2) of the vehicle 1 for description of the parameters treated as constants;
FIG. 14A is a schematic diagram illustrating acting forces (lateral forces) relating to lateral motion of the sprung body 10, and FIG. 14B is a schematic diagram illustrating acting forces (lateral forces) relating to lateral motion of the unsprung body 20;
FIG. 15 is a diagram relating to coordinate transformation of an unsprung gravity term;
FIG. 16A is a schematic diagram illustrating acting forces (longitudinal forces) relating to longitudinal motion of the sprung body 10, and FIG. 16B is a schematic diagram illustrating acting forces (longitudinal forces) relating to longitudinal motion of the unsprung body 20;
FIG. 17A is a schematic diagram illustrating acting forces (vertical forces) relating to vertical motion of the sprung body 10, and FIG. 17B is a schematic diagram illustrating acting forces (vertical forces) relating to vertical motion of the unsprung body 20;
FIG. 18A is schematic diagram illustrating acting forces relating to roll motion about an origin O_{A}, and FIG. 18B is a schematic diagram illustrating pitch motion about the origin O_{A};
FIG. 19A is a schematic diagram illustrating acting forces relating to unsprung roll motion about a support unit 40, and FIG. 19B is a schematic diagram illustrating a moment generated by hydraulic pressure of a lock cylinder about the support unit 40;
FIG. 20 is an image diagram schematically illustrating acting forces relating to sprung pitch motion about the origin O_{A};
FIG. 21 is a schematic diagram illustrating acting forces relating to unsprung pitch motion about an origin Os;
FIG. 22A is a schematic diagram illustrating acting forces during turning roll in the sprung body 10, and FIG. 22B is a schematic diagram illustrating acting forces during turning roll in the unsprung body 20;
FIG. 23 is a diagram illustrating the center-of-gravity position of the sprung body 10 as viewed from Σe and Σs;
FIG. 24 is a diagram illustrating the center-of-gravity position of the unsprung body 20 as viewed from Σe, Σs, and Σu;
FIG. 25 is a diagram illustrating rotation of coordinates by a relative roll angle φsu;
FIG. 26 is a functional block diagram of the vehicle control device 100 (controller 110) according to the present embodiment;
FIG. 27 is an example of a processing of the vehicle control device 100;
FIG. 28 is an example of a processing of the vehicle control device 100;
FIG. 29 is a graph illustrating various measured values and estimated values of wheel loads when a forklift truck 1A travels with a load of about 50% of a maximum load capacity; and
FIG. 30 is a graph illustrating various measured values and estimated values of the wheel loads when the forklift truck 1A travels with a load of 90% or more of the maximum load capacity.

### DETAILED DESCRIPTION OF THE EMBODIMENTS

An embodiment of the present invention will be described below with reference to the accompanying drawings. Various characteristic matters described below in the embodiment may be combined with each other.

A program for realizing software appearing in the embodiment may be provided as a non-transitory computer-readable recording medium for storing the program, may be provided so as to downloadable from an external server, or may be provided so that the program is activated on an external computer and functions thereof are realized on a client terminal (what is called cloud computing).

In various kinds of information processing according to the embodiment, an input and an output corresponding to the input may be realized. The aspect of information referred in the information processing (hereinafter referred to as reference information) is not limited as long as an output is obtained as a result of an input. The reference information may be, for example, rule-based information, such as a database, a look-up table, or a predetermined function (including a determination formula, such as a regression equation constructed by a statistical method), may be a trained model that has learned the correlation between an input and an output in advance, or may be a generative AI, such as a large language model or a vision-language model that is capable of outputting a desired result by receiving a prompt.

In the embodiment, the term "unit" may include, for example, a combination of hardware resources implemented by circuitry in a broad sense and information processing of software that may be specifically realized by the hardware resources. In the embodiment, various kinds of information are handled, and the information may be represented, for example, by physical values of signal values representing voltage or current, by high or low levels of signal values as a set of binary bits constituted by 0 or 1, or by quantum superposition (what is called qubits), and communication and calculation may be executed on circuitry in a broad sense.

In a broad sense, the term "circuit" in the embodiment is circuitry realized by appropriate combination of at least a circuit, circuitry, a processor, and a memory. The processor may be a general-purpose processor or a dedicated circuit. Specifically, the processor includes, for example, an application specific integrated circuit (ASIC), a programmable logic device (for example, a simple programmable logic device (SPLD), a complex programmable logic device (CPLD), and a field programmable gate array (FPGA)).

### 1. Hardware configuration

In this section, a hardware configuration (including a vehicle configuration) will be described below.

### Vehicle 1

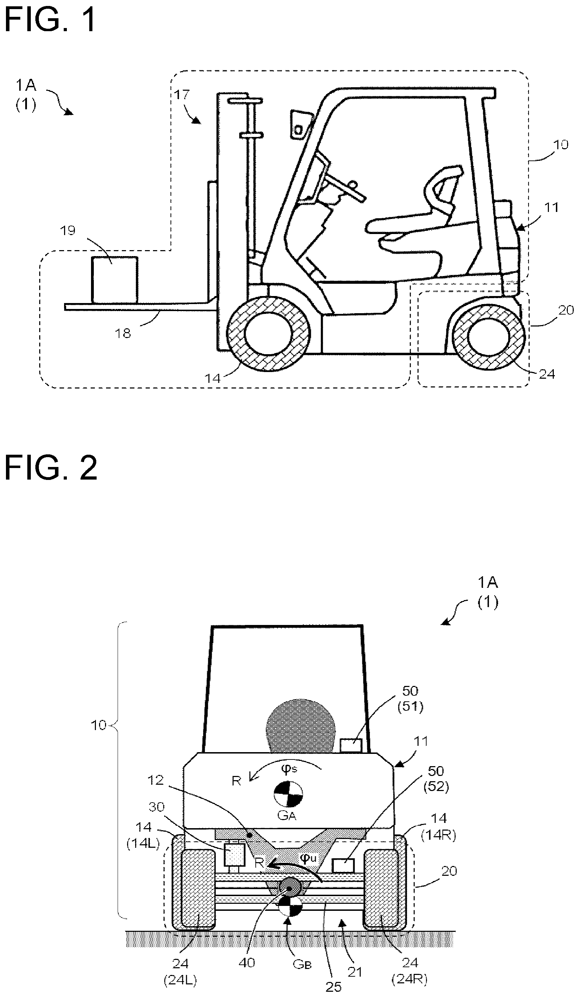

FIG. 1 is a schematic side view of a vehicle 1 of an embodiment. FIG. 2 is a rear view of the vehicle 1 as viewed from a rear side of the vehicle. The vehicle 1 of the embodiment is, as an example, a cargo handling vehicle, and specifically a four-wheel forklift truck. As illustrated in FIGS. 1 and 2, the vehicle 1 of the embodiment includes, as an example, a sprung body 10 and an unsprung body 20. As illustrated in FIG. 2, the vehicle 1 also includes a support unit 40 and an actuator 30.

As illustrated in FIG. 1, the sprung body 10 includes a vehicle body 11, a first wheel 14, a mast 17, a fork 18, and an optional load 19. The load 19 is loaded on the fork 18. As illustrated in FIG. 2, the sprung body 10 includes a frame 12. As illustrated in FIG. 2, the unsprung body 20 includes a structural portion 21. The structural portion 21 in FIG. 2 schematically indicates a structure including a second wheel 24, an axle 25 (rear wheel axle as a steering axis), and a knuckle support pedestal. Accordingly, the unsprung body 20 includes the axle 25 and the second wheel 24.

One of the first wheel 14 and the second wheel 24 is a front wheel, and the other is a rear wheel. In the embodiment, as an example, the first wheel 14 is the front wheel 14, and the second wheel 24 is the rear wheel 24. As illustrated in FIG. 2, the front wheel 14 includes a left front wheel 14L and a right front wheel 14R. The rear wheel 24 includes a left rear wheel 24L and a right rear wheel 24R. The vehicle 1 is a vehicle that travels while carrying the load 19 in various states, and examples thereof include a forklift truck, a truck, a trailer, and a bus. In the present embodiment, the vehicle 1 is described as a rear-wheel-steered forklift truck 1A.

As illustrated in FIG. 2, the support unit 40 rotatably supports the vehicle body 11 and the axle 25 in a roll direction in the forklift truck 1A (example of the vehicle 1). In other words, the axle 25 is supported on the vehicle body 11 by the support unit 40 so as to be rotatable in the roll direction. The support unit 40 may employ, for example, a coupling structure, such as a pin. Accordingly, the unsprung body 20 is coupled to the sprung body 10 by the support unit 40 so as to be constrained, while being rotatable in a roll direction about the support unit 40. With such a configuration, independent roll rotations occur in the sprung body 10 and the unsprung body 20, respectively. In the embodiment, a vehicle exhibiting such independent roll rotation behavior is also referred to as a "two-inertia vehicle". The forklift truck 1A is an example of a vehicle that has two independent inertia systems.

Note that the "sprung (body)" and the "unsprung (body)" of the embodiment are classifications in a two-inertia vehicle, and are different from structural classifications in a one-inertia vehicle (classification of a vehicle structure by a suspension). The sprung body 10 may be also referred to as a first inertia system, a first inertia body, a first structural body, or a first mass body, and the unsprung body 20 may be also referred to as a second inertia system, a second inertia body, a second structural body, or a second mass body.

As illustrated in FIG. 2, as an example in the embodiment, the actuator 30 is interposed between an end portion of the frame 12 of the sprung body 10 and an end portion of the axle 25 of the unsprung body 20. Accordingly, the actuator 30 is configured to restrict rotations of the vehicle body 11 and the axle 25 in the roll direction. In other words, the forklift truck 1A is configured to restrict roll rotation of the vehicle body 11 by the actuator 30.

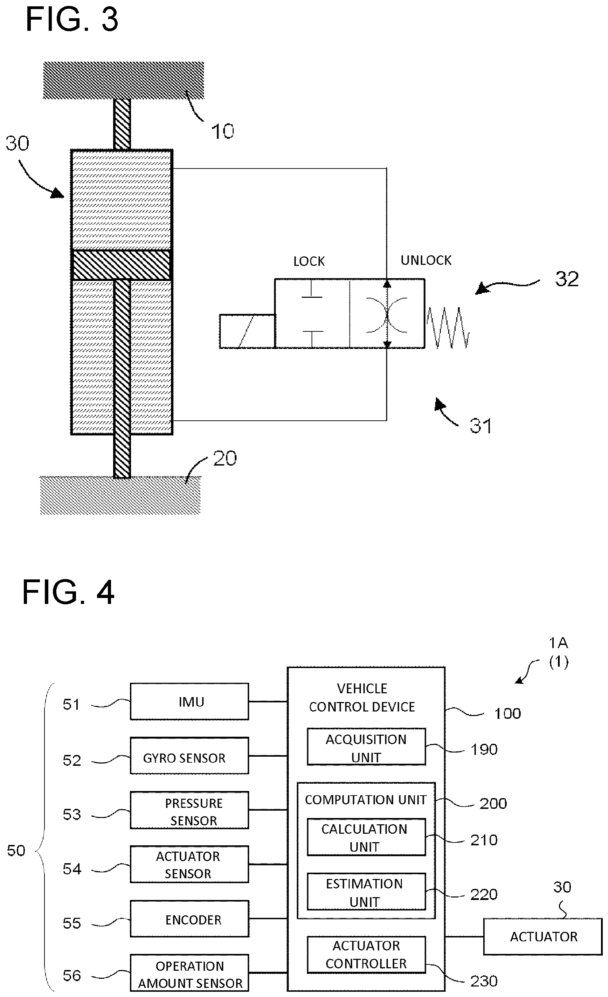

FIG. 3 is a diagram a configuration of the actuator 30 of the embodiment. The actuator 30 includes a hydraulic circuit 31 and a solenoid valve 32, and is, as an example, a hydraulic actuator, specifically, a hydraulic lock cylinder. When the solenoid valve 32 is turned on, the hydraulic circuit 31 is shut off and a cylinder of the actuator 30 is locked. Accordingly, the sprung body 10 and the unsprung body 20 are rigidly coupled by compressible hydraulic pressure of the actuator 30. As a result, rotations of the vehicle body 11 and the axle 25 in the roll direction is suppressed. Furthermore, when the solenoid valve 32 is turned off, the hydraulic circuit 31 is opened and the cylinder of the actuator 30 is unlocked. In the unlocked state, rigid coupling as in the locked state is not provided, but throttling resistance due to oil pass through an orifice included in the solenoid valve 32 acts.

FIG. 4 is a block diagram of a hardware configuration of the vehicle 1. The forklift truck 1A (example of the vehicle 1) includes a vehicle control device 100 and a plurality of sensors 50. The sensors 50 are a plurality of various sensors used for control of the forklift truck 1A. The sensors 50 are configured to continuously acquire motion information IFm. Specifically, for example, the sensors 50 illustrated in FIG. 4 may include an IMU 51, a gyro sensor 52, a pressure sensor 53, an actuator sensor 54, an encoder 55, and an operation amount sensor 56. IMU is an abbreviation for inertial measurement unit. The IMU 51, the gyro sensor 52, the pressure sensor 53, the actuator sensor 54, the encoder 55, and the operation amount sensor 56 are connected to the vehicle control device 100. The sensors 50 are configured to acquire the motion information IFm relating to motion of the forklift truck 1A (example of the vehicle 1). The vehicle control device 100 receives the motion information IFm acquired by the sensors 50. Note that the forklift truck 1A includes various sensors and actuators, but for simplification of description, FIG. 4 omits illustration of components other than the actuator 30, the IMU 51, the gyro sensor 52, the pressure sensor 53, the actuator sensor 54, the encoder 55, and the operation amount sensor 56. Hereinafter, the **IMU** 51, the gyro sensor 52, the pressure sensor 53, the actuator sensor 54, the encoder 55, and the operation amount sensor 56 will be further described.

The **IMU** 51 includes acceleration sensors and gyro sensors of a strain type, a MEMS type, or the like. The **IMU** 51 detects accelerations in the three axial directions of a sprung coordinate system and angular velocities about the three axes of the sprung coordinate system (i.e., a three-axis acceleration and a three-axis angular velocity of the sprung coordinate system), and outputs the detected values. The **IMU** 51 is disposed at an optional position on the forklift truck 1A, and in the forklift truck 1A illustrated in FIG. 2, is disposed at an upper portion of the vehicle body 11 (sprung body 10). This allows accelerations in the three axial directions and angular velocities about the three axes of the sprung body 10 to be measured.

The gyro sensor 52 employs, for example, a MEMS type, detects the angular velocities about the three axes of the unsprung coordinate system, and outputs the detected values. The gyro sensor 52 is disposed at an optional position on the forklift truck 1A, and in the forklift truck 1A illustrated in FIG. 2, is disposed at an upper portion of the structural portion 21 (unsprung body 20). This allows the angular velocities about the three axes of the unsprung body 20 to be measured.

The pressure sensor 53 is a sensor for detecting the mass of the load 19 loaded on the fork 18, and is, for example, a pressure sensor that detects the pressure of hydraulic oil for actuating the fork 18, or a sheet-shaped pressure sensor provided on the entire loading surface of the fork 18. The pressure sensor 53 detects the pressure of the hydraulic oil, pressure applied to each position on the loading surface, or the like, and outputs the detected values.

The actuator sensor 54 detects pressure in the cylinder of the actuator 30, and outputs the detected values. Specifically, the actuator sensor 54 is a hydraulic sensor, and accordingly, can measure a lock cylinder hydraulic pressure Fcs, which is hydraulic pressure in the cylinder of the actuator 30.

The encoder 55 detects a rotation angle of a lifting hydraulic motor for raising and lowering the fork 18, and outputs the detected values.

The operation amount sensor 56 detects each of an acceleration pedal depression amount, a brake pedal depression amount, and a steering angle, and outputs the detected values.

### Vehicle control device 100

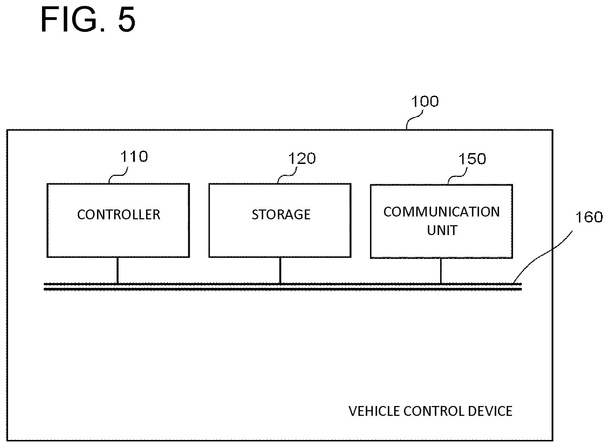

FIG. 5 is a block diagram of a hardware configuration of the vehicle control device 100 an example. The vehicle control device 100 includes electronic controllers (ECUs) in accordance with functional purposes. Although there is no limitation on a specific configuration of the vehicle control device 100, the vehicle control device 100 (ECU) includes, as an example, a controller 110, a storage 120, a communication unit 150, and a communication bus 160. The controller 110, the storage 120, and the communication unit 150 are electrically connected through the communication bus 160.

The controller 110 performs processing and control of overall operations relating to the vehicle control device 100. The controller 110 includes, for example, a non-illustrated central processing unit (CPU). The controller 110 implements various functions relating to the vehicle control device 100 by reading predetermined programs stored in the storage 120. In other words, information processing by software stored in the storage 120 is concretely realized by a processor, which is an example of hardware, to be executed as functional components included in the processor. Note that the controller 110 is not limited to being a single unit, and may be implemented to include a plurality of controllers 110 for respective functions. Alternatively, the controller 110 may be a combination thereof. In other words, the vehicle control device 100 includes the controller 110 as at least one processor. The controller 110, which is a processor, is configured to execute respective steps to be described later by reading programs. In other words, the vehicle control device 100 includes at least one processor capable of executing programs so that steps of an information processing method to be described later are performed.

The storage 120 stores various kinds of information. For example, the storage 120 may be a storage device, such as a solid state drive (SSD), which stores various programs relating to the vehicle control device 100 that are executed by the controller 110, or a memory, such as a random access memory (RAM) that stores information (arguments, arrays, and the like) temporarily required for program operations. The storage 120 stores various programs, variables, and the like, relating to the vehicle control device 100, which are executed by the processor of the controller 110.

The communication unit 150 can communicate with various hardware components (including sensors and actuators) included in the forklift truck 1A, and includes an input-output interface capable of transmitting and receiving various signals with various hardware components. The communication unit 150 preferably performs communication by wired communication means (for example, a wire harness), but may include wireless communication or the like as necessary. Data communication for integrated control of the entire forklift truck 1A is performed in an in-vehicle network including the communication unit.

According to the above-described configuration, information from various sensors is acquired through the communication unit 150. By reading programs in the storage 120, the controller 110 performs various kinds of computational processing by using various kinds of information (for example, information based on sensor signals). Control signals for controlling actuators included in the forklift truck 1A are generated based on computational processing of the controller 110, and the various actuators operate in accordance with the control signals.

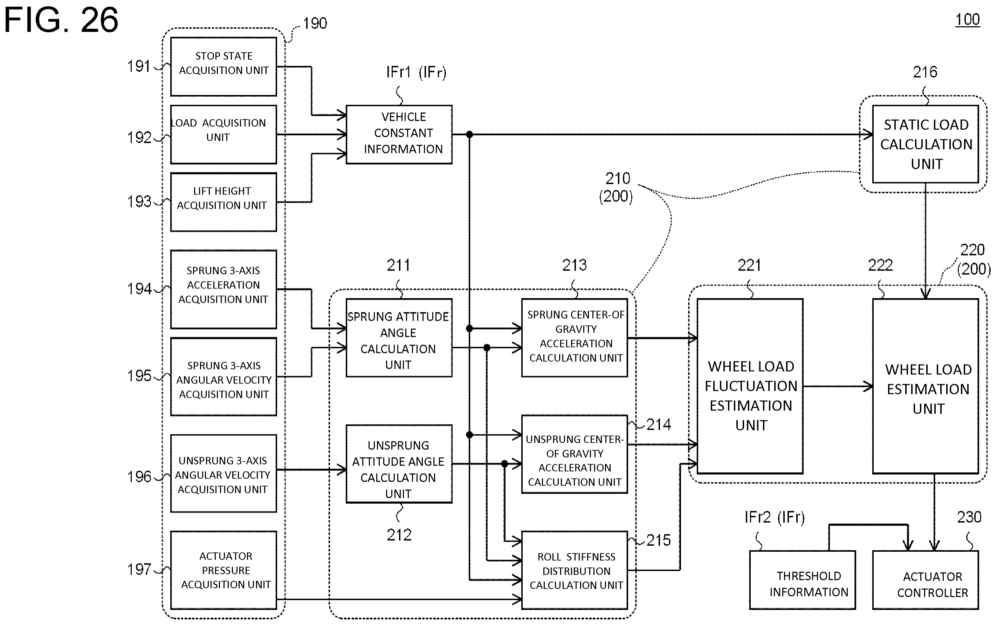

As illustrated in functional blocks in FIG. 4, the vehicle control device 100 includes various kinds functional components (an acquisition unit 190, a computation unit 200, a calculation unit 210, an estimation unit 220, and an actuator controller 230). Each of these functional components is implemented by the controller 110 in FIG. 5 reading a predetermined program stored in the storage 120. For example, specific configurations and operations of the respective functional components are exemplarily illustrated in FIGS. 26 to 28 and will be described later in detail.

### 2. Principle

In the second section, the principle of the embodiment will be described.

### 2.1. Coordinate system definition

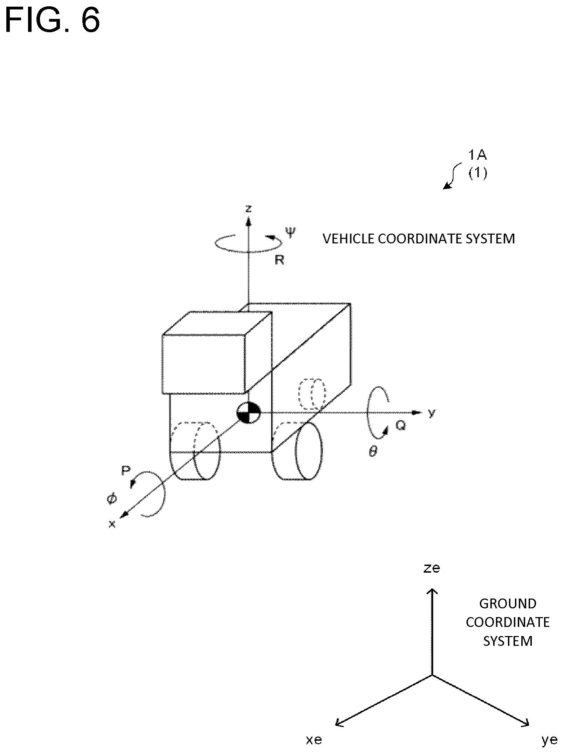

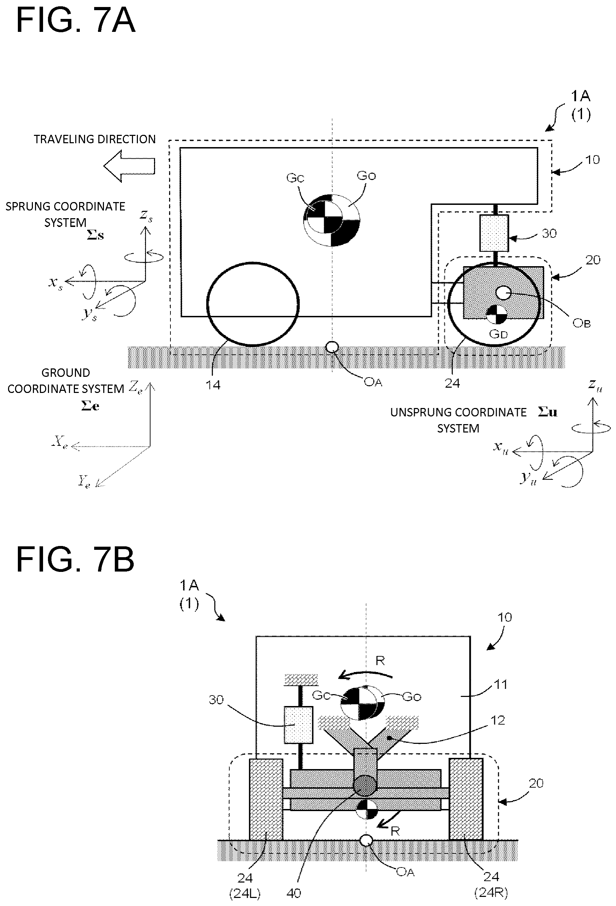

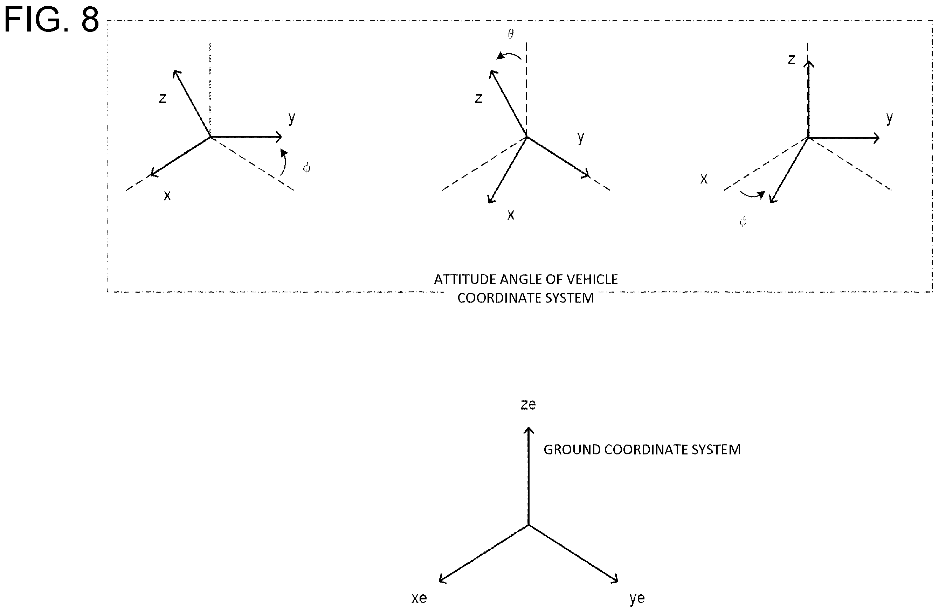

First, coordinate systems used in a calculation method of the embodiment will be described. FIG. 6 is a diagram of a vehicle coordinate system with respect to a ground coordinate system. FIG. 7A is a schematic side view (corresponding to FIG. 1) of the vehicle 1 for defining coordinate systems, and FIG. 7B is a schematic rear view (corresponding to FIG. 2) of the vehicle 1. FIG. 8 is a diagram illustrating attitude angles of the vehicle coordinate system with respect to the ground coordinate system.

In FIG. 6, in the vehicle coordinate system, the forward and backward traveling direction of the vehicle 1 is an x axis, the lateral direction (width direction) is a y axis, and the vertical direction is a z axis.

In FIGS. 7A and 7B, definitions of coordinate systems are illustrated for a sprung coordinate system, an unsprung coordinate system, and a ground coordinate system. The sprung coordinate system is denoted as "Σₛ", the unsprung coordinate system is denoted as "Σᵤ", and the ground coordinate system is denoted as "Σₑ".

The ground coordinate system Σₑ is a ground-fixed coordinate system. The sprung coordinate system Σₛ and the unsprung coordinate system Σᵤ are right-handed coordinate systems in which the vehicle forward direction is an x axis (same coordinate axis direction) and the upward direction is a z axis. The ground coordinate system Σₑ is a right-handed coordinate system in which the vehicle forward direction in an initial state before traveling is an x axis and the upward vertical axis direction is a z axis. A center of gravity Go is the center of gravity of the entire vehicle 1. An origin O_{A} of the sprung coordinate system Σₛ is an intersection point between the ground and a vertical axis passing through the center of gravity Go of the entire vehicle. An origin O_{B} of the unsprung coordinate system Σᵤ is a central point on a support shaft of the support unit 40.

The unsprung body 20 performs pitch rotation and yaw rotation together with the sprung body 10. The unsprung body 20 performs roll rotation about the support unit 40 of the sprung body 10. Note that arrows R illustrated in FIGS. 2 and 7B indicate roll rotation.

In FIG. 8, vehicle attitude angles are illustrated as a vehicle roll angle φ, a vehicle pitch angle θ, and a vehicle yaw angle ψ. The vehicle attitude angles are the rotation angles of respective axes of the vehicle coordinate system with respect to the ground coordinate system. Since the sprung coordinate system and the unsprung coordinate system are defined, the sprung coordinate system and the unsprung coordinate system have attitude angles with respect to the ground coordinate system.

Specifically, among the attitude angles of the sprung coordinate system and the unsprung coordinate system, a pitch angle and a yaw angle are the same attitude angles for the sprung coordinate system and the unsprung coordinate system with respect to the ground coordinate system since the unsprung body 20 performs pitch rotation and yaw rotation together with the sprung body 10. Among the attitude angles of the sprung coordinate system and the unsprung coordinate system, a roll angle is an independent attitude angle for the sprung coordinate system and the unsprung coordinate system with respect to the ground coordinate system since the unsprung body 20 performs roll rotation about the support unit 40 of the sprung body 10.

### 2.2. Representation of constraint between sprung body 10 and unsprung body 20

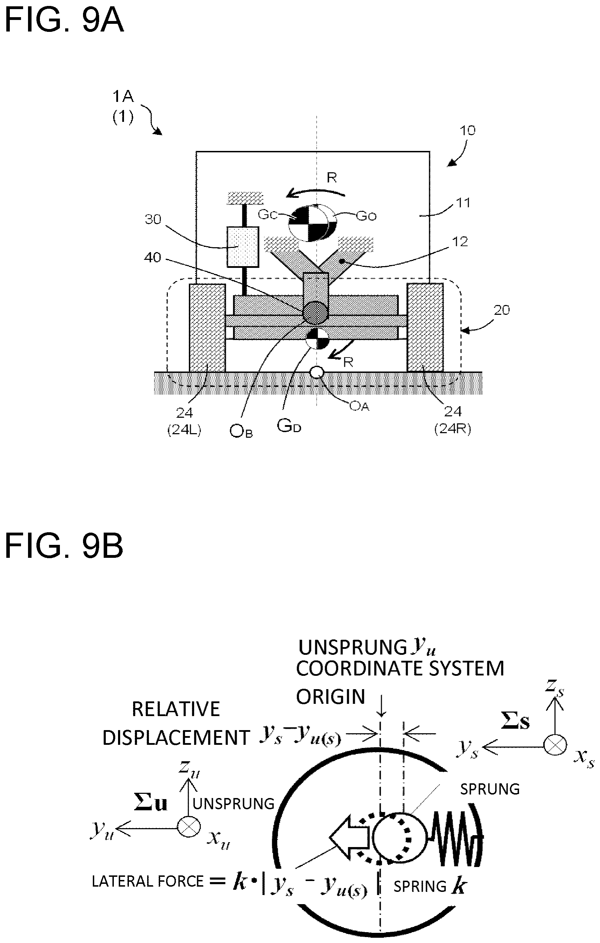

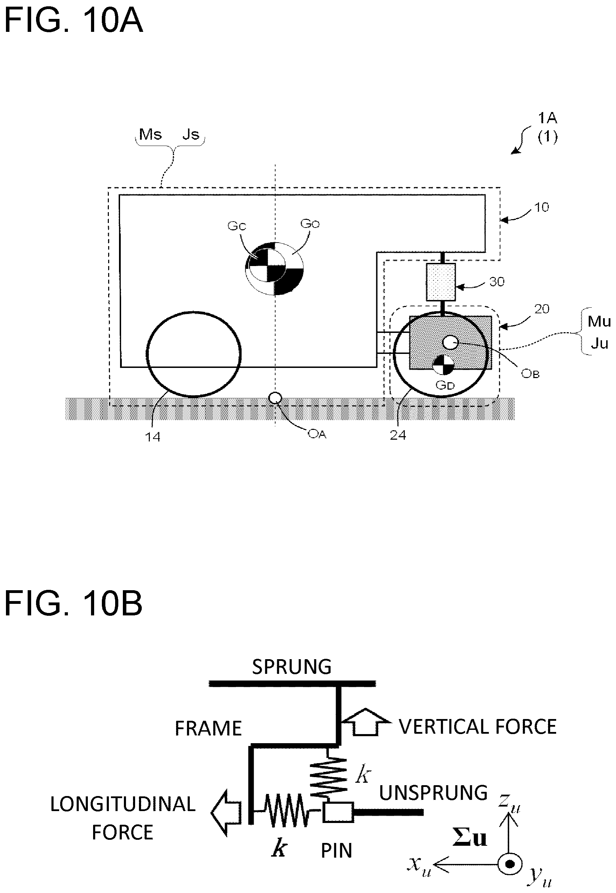

A representation of constraint between the sprung body 10 and the unsprung body 20, which is used in the calculation method of the embodiment will be described next. FIG. 9A is a schematic rear view (corresponding to FIG. 2) of the vehicle 1 for depicting constraint between a sprung body 10 and an unsprung body 20, and FIG. 9B is a schematic view of a virtual spring between the sprung body 10 and the unsprung body 20 in the rear view of the vehicle 1 for depicting constraint between a sprung body 10 and an unsprung body 20. FIG. 10A is a schematic side view (corresponding to FIG. 1) of the vehicle 1 for depicting constraint between the sprung body 10 and the unsprung body 20, and FIG. 10B is a schematic view of virtual springs between the sprung body 10 and the unsprung body 20 in the side view of the vehicle 1.

In FIGS. 9 and 10, a state is illustrated in which lateral force, longitudinal force, and vertical force act in yₛ, xₛ, and zₛ directions by virtual springs between the sprung body 10 and the unsprung body 20. Each acting force is expressed as the product of a virtual spring constant k and relative displacement between the sprung body 10 and the unsprung body 20 in the corresponding axial direction.

### 2.3. Symbols used in calculation method and estimation method of embodiment

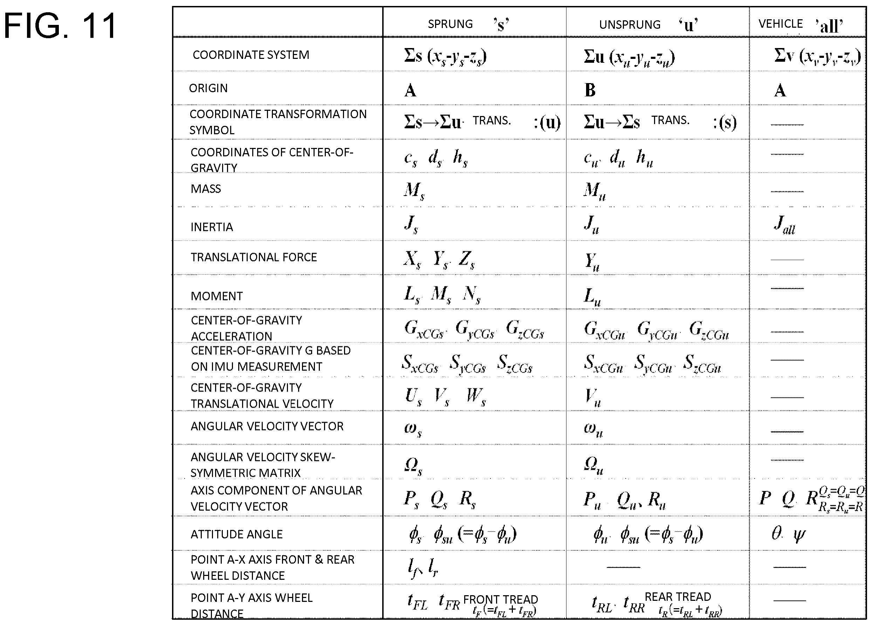

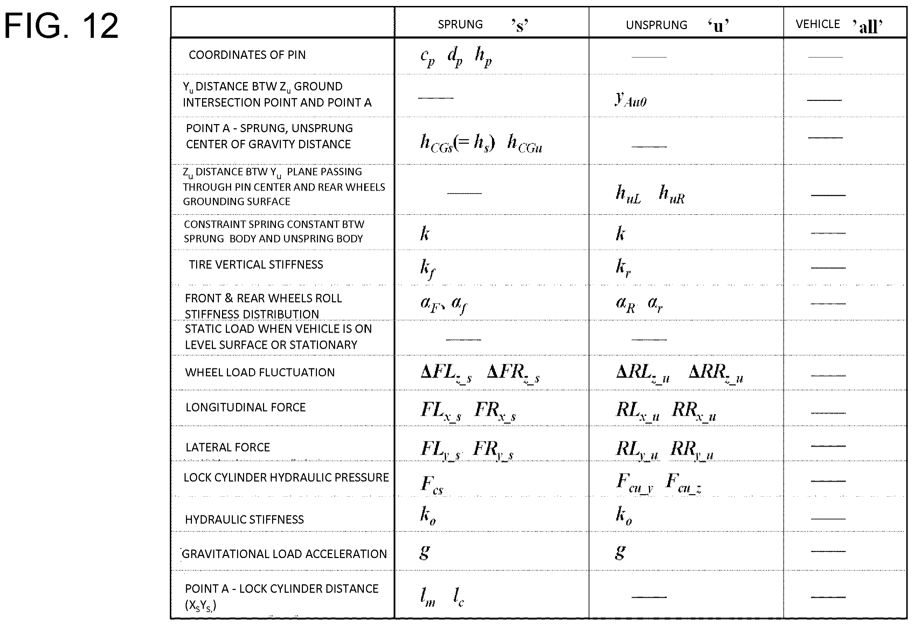

FIGS. 11 and 12 are tables of symbols used in the calculation method and the estimation method of the embodiment. Hereinafter, a wheel load estimation method and an actuator control method will be described by using these symbols.

### 2.4. Parameters treated as constants

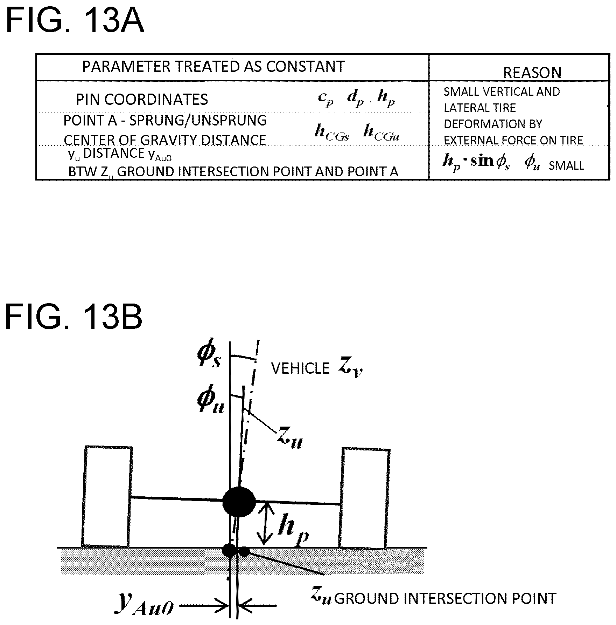

Among parameters illustrated in FIGS. 11 and 12, which vary depending on a motion state of the vehicle 1, parameters treated as constants will be described next. FIG. 13A is a table of parameters treated as constants, and FIG. 13B is a schematic rear view (corresponding to FIG. 2) of the vehicle 1 for description of the parameters treated as constants.

In Expression (1), y_{Au0} is set to 0 by assuming hₚ·sinφₛ and φᵤ to be small as illustrated in FIG. 13A. Note that, in this case, the pitch angle θ is set to 0. As illustrated in FIG. 13B, a ground intersection point of an unsprung zᵤ axis is assumed to pass through point A.
[Math. 1] ${y}_{Au 0} = {h}_{p} ⋅ \left({sinϕ}_{s}-{cosϕ}_{s}⋅{sinϕ}_{u}\right) * ≒ 0$

### 2.5. Model with six degrees of freedom

Expressions (2) to (4) are motion models of a rigid body with six degrees of freedom. Note that state variables in Expressions (2) to (4) are expressed without subscripts "s", "u", or the like, but is expressed with "s" or "u" in motion models of the sprung body 10 and the unsprung body 20 to be described later. $\begin{matrix}\left[\begin{matrix}\dot{P} \\ \dot{Q} \\ \dot{R}\end{matrix}\right] = {J}^{- 1} \left(-\left[\begin{matrix}0 & - R & Q \\ R & 0 & - P \\ - Q & P & 0\end{matrix}\right]⋅J⋅\left[\begin{matrix}P \\ Q \\ R\end{matrix}\right]+\left[\begin{matrix}L \\ M \\ N\end{matrix}\right]\right) \left(2\right) \\ \left[\begin{matrix}\dot{U} \\ \dot{V} \\ \dot{W}\end{matrix}\right] = - \left[\begin{matrix}0 & - R & Q \\ R & 0 & - P \\ - Q & P & 0\end{matrix}\right] ⋅ \left[\begin{matrix}U \\ V \\ W\end{matrix}\right] + g ⋅ \left[\begin{matrix}- sin θ \\ sin ϕ cos θ \\ cos ϕ cos θ\end{matrix}\right] + \frac{1}{M} ⋅ \left[\begin{matrix}X \\ Y \\ Z\end{matrix}\right] \left(3\right) \\ \left[\begin{matrix}\dot{ϕ} \\ \dot{θ} \\ \dot{ψ}\end{matrix}\right] = \left[\begin{matrix}1 & sin ϕ tan θ & cos ϕ tan θ \\ 0 & cos θ & - sin ϕ \\ 0 & sin ϕ / cos θ & cos ϕ / cos θ\end{matrix}\right] ⋅ \left[\begin{matrix}P \\ Q \\ R\end{matrix}\right] \left(4\right)\end{matrix}$

Expressions (5) to (8) are expressions showing angular velocity vectors ωₛ and ωᵤ and angular velocity skew-symmetric matrices Ωₛ and Ωᵤ of the sprung body 10 and the unsprung body 20. $\begin{matrix}{ω}_{s} = {\left[{P}_{s} {Q}_{s} {R}_{s}\right]}^{T} \left(5\right) \\ {ω}_{u} = {\left[{P}_{u} {Q}_{u} {R}_{u}\right]}^{T} \left(6\right) \\ {Ω}_{s} = \left[\begin{matrix}0 & - {R}_{s} & {Q}_{s} \\ {R}_{s} & 0 & - {P}_{s} \\ - {Q}_{s} & {P}_{s} & 0\end{matrix}\right] \left(7\right) \\ {Ω}_{u} = \left[\begin{matrix}0 & - {R}_{u} & {Q}_{u} \\ {R}_{u} & 0 & - {P}_{u} \\ - Q & {P}_{u} & 0\end{matrix}\right] \left(8\right)\end{matrix}$

### 2.6. Translational motion

### 2.6.1. Lateral motion

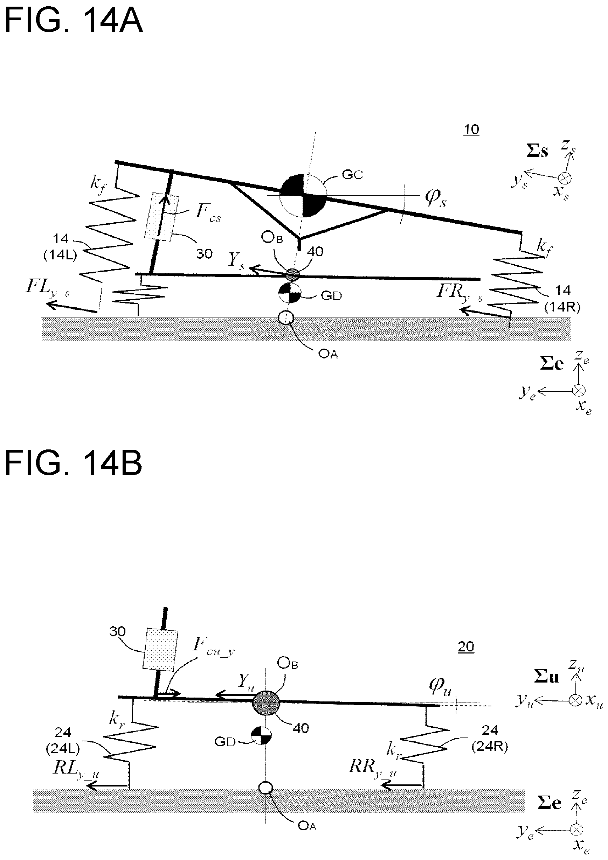

FIG. 14A is a schematic diagram illustrating acting forces (lateral forces) relating to lateral motion of the sprung body 10, and FIG. 14B is a schematic diagram illustrating acting forces (lateral forces) relating to lateral motion of the unsprung body 20.

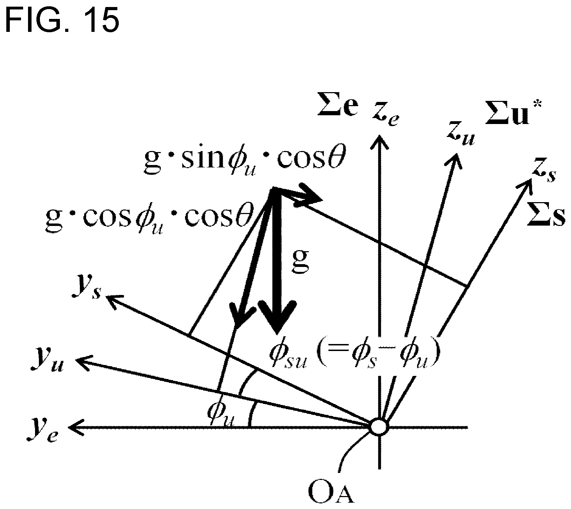

FIG. 15 is a diagram relating to coordinate transformation of an unsprung gravity term. FIG. 15 is a diagram for description of coordinate transformation of a gravity term to be described later, and illustrates the origin O_{A} as coordinate origins of Σₑ, Σₛ, and Σᵤ*. Σᵤ* is a coordinate system obtained by shifting the origin O_{B}, which is the origin of Σᵤ, to the origin O_{A}.

Expression (9) is an expression representing lateral motion of the sprung body 10, which is derived from FIG. 14A and Expression (3). Expression (10) is an expression representing lateral motion of the unsprung body 20, which is derived from FIG. 14B and Expression (3). G_{yCGs} in Expression (9) and G_{yCGu(s)} in Expression (10) are obtained by grouping terms relating to U, V, and W in Expression (3). Behavior of the unsprung body 20 in Expression (10) is expressed as behavior of the unsprung body 20 with respect to Σₑ as viewed from Σₛ. A subscript (s) in Expression (10) is a coordinate transformation symbol illustrated in FIG. 11. $\begin{matrix}{M}_{s} ⋅ \left({G}_{yCGs}+g⋅{sinϕ}_{s}⋅cosθ\right) = {Y}_{s} + {FL}_{y _ s} + {FR}_{y _ s} \\ = k ⋅ \left({y}_{u \left(s\right)}-{y}_{s}\right) + {FL}_{y _ s} + {FR}_{y _ s} \left(9\right) \\ {M}_{u} ⋅ \left({G}_{yCGu \left(s\right)}+{\left(g⋅{sinϕ}_{u}⋅cosθ\right)}_{\left(s\right)}\right) = {Y}_{u \left(s\right)} + {RL}_{y _ u \left(s\right)} + {RR}_{y _ u \left(s\right)} \\ = k ⋅ \left({y}_{s}-{y}_{u \left(s\right)}\right) + {RL}_{y _ u \left(s\right)} + {RR}_{y _ u \left(s\right)} \left(10\right)\end{matrix}$

The first term G_{yCGu(s)} on the left-hand side of Expression (10) is lateral acceleration at the center-of-gravity position (center of gravity G_{D}) of the unsprung body 20 with respect to Σₑ as viewed from Σₛ, and is coordinate-transformed. The second term (g·sinφᵤ·cosθ)₍ₛ₎ on the left-hand side of Expression (10) is obtained by coordinate-transforming g·sinφᵤ·cosθ based on Expression (11) by using a relative roll angle φₛᵤ between the sprung body 10 and the unsprung body 20 as illustrated in FIG. 15.
[Math. 5] $\left[\begin{matrix}{\left(g⋅{sinϕ}_{u}⋅cosθ\right)}_{\left(s\right)} \\ {\left(g⋅{cosϕ}_{u}⋅cosθ\right)}_{\left(s\right)}\end{matrix}\right] = \left[\begin{matrix}{cosϕ}_{su} & {sinϕ}_{su} \\ - {sinϕ}_{su} & {cosϕ}_{su}\end{matrix}\right] \left[\begin{matrix}g ⋅ sin {ϕ}_{u} ⋅ cos θ \\ g ⋅ cos {ϕ}_{u} ⋅ cos θ\end{matrix}\right]$

When Expression (10) is rearranged to factor out spring force and substituted into Expression (9), lateral motion of the sprung body 10 and the unsprung body 20 with respect to Σₑ as viewed from Σₛ is expressed by Expression (12).
[Math. 6] $\begin{matrix}{M}_{s} ⋅ \left({G}_{yCGs}+g⋅{sinϕ}_{s}⋅cosθ\right) \\ = - {M}_{u} ⋅ \left({G}_{yCGu \left(s\right)}+{\left(g⋅{sinϕ}_{u}⋅cosθ\right)}_{\left(s\right)}\right) + {FL}_{y _ s} + {FR}_{y _ s} + {RL}_{y _ u \left(s\right)} \\ + {RR}_{y _ u \left(s\right)}\end{matrix}$

### 2.6.2. Longitudinal motion

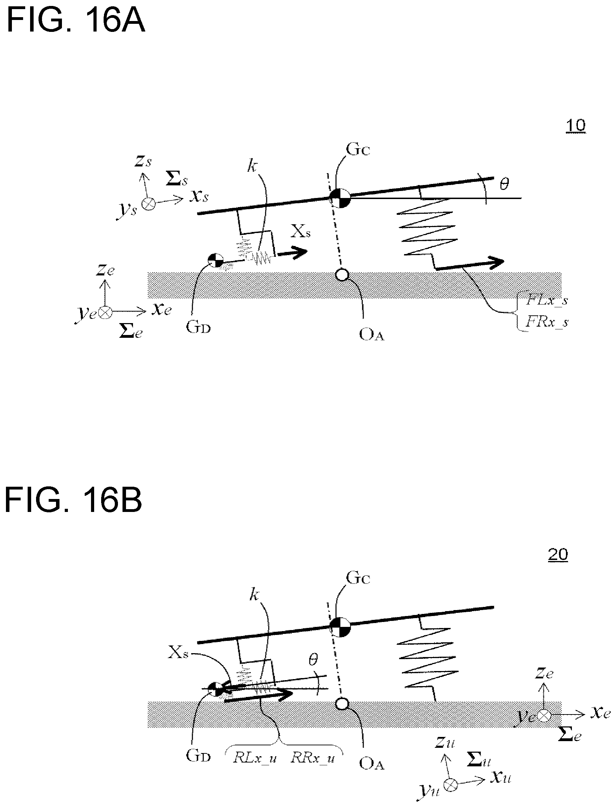

FIG. 16A is a schematic diagram illustrating acting forces (longitudinal forces) relating to longitudinal motion of the sprung body 10, and FIG. 16B is a schematic diagram illustrating acting forces (longitudinal forces) relating to longitudinal motion of the unsprung body 20.

Longitudinal motion of the sprung body 10 is expressed by Expression (13), which is derived from FIG. 16A and Expression (3). Longitudinal motion of the unsprung body 20 is expressed by Expression (14), which is derived from FIG. 16B and Expression (3). G_{xCGs} in Expression (13) and G_{xCGu(s)} in Expression (14) are obtained by grouping terms relating to U, V, and W in Expression (3). $\begin{matrix}{M}_{s} ⋅ \left({G}_{xCGs}-g⋅sinθ\right) = k ⋅ \left({x}_{u \left(s\right)}-{x}_{s}\right) + {FL}_{x _ s} + {FR}_{x _ s} \left(13\right) \\ {M}_{u} ⋅ \left({G}_{xCGu \left(s\right)}-{\left(g⋅sinθ\right)}_{\left(s\right)}\right) = k ⋅ \left({x}_{s}-{x}_{u \left(s\right)}\right) + {RL}_{x _ u} + {RR}_{x _ u} \left(14\right)\end{matrix}$

When Expression (14) is rearranged to factor out spring force and substituted into Expression (13), longitudinal motion of the sprung body 10 and the unsprung body 20 with respect to Σₑ as viewed from Σₛ is expressed by Expression (15).
[Math. 8] $\begin{matrix}{M}_{s} ⋅ \left({G}_{xCGs}-g⋅sinθ\right) \\ = - {M}_{u} ⋅ \left({G}_{xCGu \left(s\right)}-{\left(g⋅sinθ\right)}_{\left(s\right)}\right) + {FL}_{x _ s} + {FR}_{x _ s} + {RL}_{x _ u} + {RR}_{x _ u}\end{matrix}$

### 2.6.3. Vertical motion

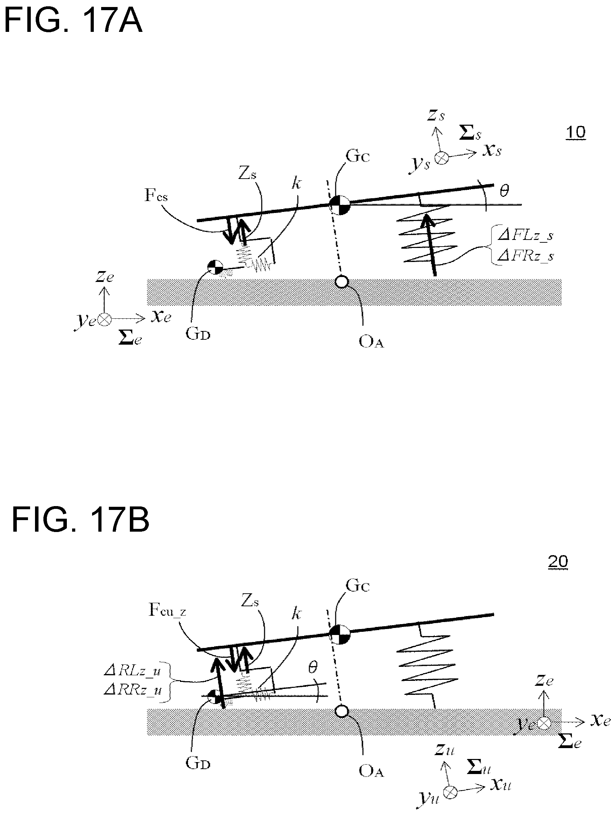

FIG. 17A is a schematic diagram illustrating acting forces (vertical forces) relating to vertical motion of the sprung body 10, and FIG. 17B is a schematic diagram illustrating acting forces (vertical forces) relating to vertical motion of the unsprung body 20.

Vertical motion of the sprung body 10 is expressed by Expression (16), which is derived from FIG. 17A and Expression (3). Vertical motion of the unsprung body 20 is expressed by Expression (17), which is derived from FIG. 17B and Expression (3). G_{zCGs} in Expression (16) and G_{zCGu(s)} in Expression (17) are obtained by grouping terms relating to U, V, and W in Expression (3). $\begin{matrix}{M}_{s} ⋅ \left({G}_{zCGs}+g⋅{cosϕ}_{s}⋅cosθ\right) = k ⋅ \left({z}_{u \left(s\right)}-{z}_{s}\right) + Δ {FL}_{z _ s} + Δ {FR}_{z _ s} - {F}_{cs} \left(16\right) \\ {M}_{u} ⋅ \left({G}_{zCGu \left(s\right)}+{\left(g⋅{cosϕ}_{u}⋅cosθ\right)}_{\left(s\right)}\right) \\ = k ⋅ \left({z}_{s}-{z}_{u \left(s\right)}\right) + Δ {RL}_{z _ u \left(s\right)} + Δ {RR}_{z _ u \left(s\right)} + {F}_{cs} \left(17\right)\end{matrix}$

In Expression (17), (g·cosφᵤ·cosθ)₍ₛ₎ is obtained by transformation according to the same procedure as that of Expression (10). When Expression (17) is rearranged to factor out spring force and substituted into Expression (16), vertical motion of the sprung body 10 and the unsprung body 20 with respect to Σₑ as viewed from Σₛ is expressed by Expression (18).
[Math. 10] $\begin{matrix}{M}_{s} ⋅ \left({G}_{zCGs}+g⋅{cosϕ}_{s}⋅cosθ\right) \\ = - {M}_{u} ⋅ \left({G}_{zCGu \left(s\right)}+{\left(g⋅{cosϕ}_{u}⋅cosθ\right)}_{\left(s\right)}\right) + Δ {FL}_{z _ s} + Δ {FR}_{z _ s} \\ + Δ {RL}_{z _ u \left(s\right)} + {ΔRR}_{z _ u \left(s\right)}\end{matrix}$

### 2.7. Rotational motion

Rotational motion will be described next by using translational forces (lateral force, longitudinal force, and vertical force) of the sprung body 10 and the unsprung body 20. A rotational motion model is obtained by describing respective motions of the sprung body 10 and the unsprung body 20 and eliminating spring force and lock cylinder hydraulic pressure, which are common terms (internal forces) of both motions.

### 2.7.1. Roll motion

### (1) Sprung roll motion

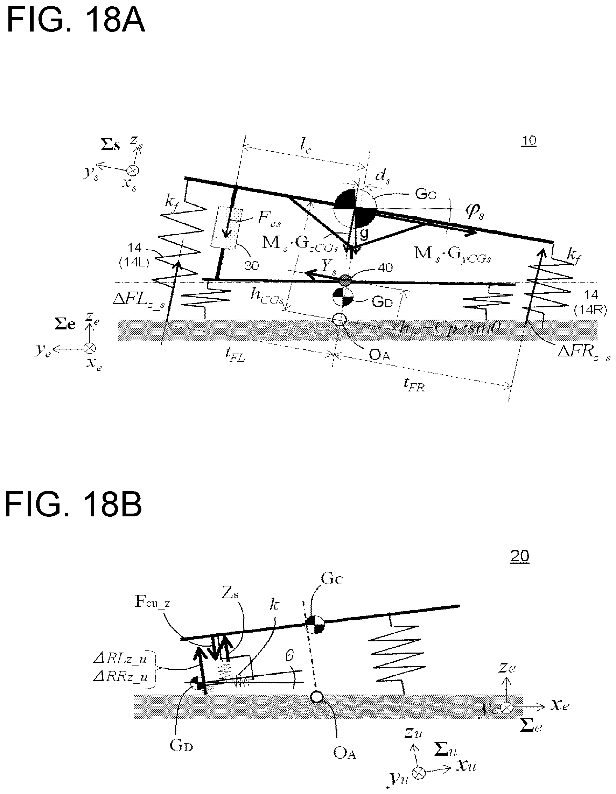

FIG. 18A is schematic diagram illustrating acting forces relating to roll motion about an origin O_{A}, and FIG. 18B is a schematic diagram illustrating pitch motion about the origin O_{A}. Based on FIGS. 18A and 18B, sprung roll motion about the origin O_{A} with respect to Σₑ as viewed from Σₛ is expressed in Expression (11).
[Math. 11] $\begin{matrix}{\left[{J}_{s}⋅{\dot{ω}}_{s}+{Ω}_{s}⋅{J}_{s}⋅{ω}_{s}\right]}_{Roll} \\ = {M}_{s} ⋅ \left({G}_{yCGs}+g⋅sin {ϕ}_{s}⋅cosθ\right) ⋅ {h}_{CGs} - k ⋅ \left({y}_{u \left(s\right)}-{y}_{s}\right) \\ ⋅ \left({h}_{p}+{c}_{p}⋅sinθ\right) + Δ {FL}_{z _ s} ⋅ {t}_{FL} - Δ {FR}_{z _ s} ⋅ {t}_{FR} - {F}_{cs} ⋅ {l}_{c} - {M}_{s} \\ ⋅ \left({G}_{zCGs}+g⋅{cosϕ}_{s}⋅cosθ\right) ⋅ {d}_{s}\end{matrix}$

A subscript "Roll" on the left-hand side of Expression (19) indicates extraction of the first row in Expression (2). Jₛ is an inertia tensor about the center-of-gravity position (center of gravity Gc) of the sprung body 10. As illustrated in FIG. 13, h_{CGs}, hₚ, and dₛ are treated as constants. When Expression (10) is rearranged to factor out spring force and substituted into Expression (19), Expression (20) is obtained.
[Math. 12] $\begin{matrix}{\left[{J}_{s}⋅{\dot{ω}}_{s}+{Ω}_{s}⋅{J}_{s}⋅{ω}_{s}\right]}_{Roll} \\ = {M}_{s} ⋅ \left({G}_{yCGs}+g⋅{sinϕ}_{s}⋅cosθ\right) ⋅ {h}_{CGs} + Δ {FL}_{z _ s} ⋅ {t}_{FL} - Δ {FR}_{z _ s} ⋅ {t}_{FR} \\ - {F}_{cs} ⋅ {l}_{c} \\ + \left[{M}_{u}⋅\left({G}_{yCGu \left(s\right)}+{\left(g⋅{sinϕ}_{u}⋅cosθ\right)}_{\left(s\right)}\right)-{RL}_{y _ u \left(s\right)}-{RR}_{y _ u \left(s\right)}\right] \\ ⋅ \left({h}_{p}+{c}_{p}⋅sinθ\right) - {M}_{s} ⋅ \left({G}_{zCGs}+g⋅{cosϕ}_{s}⋅cosθ\right) ⋅ {d}_{s}\end{matrix}$

### (2) Unsprung roll motion

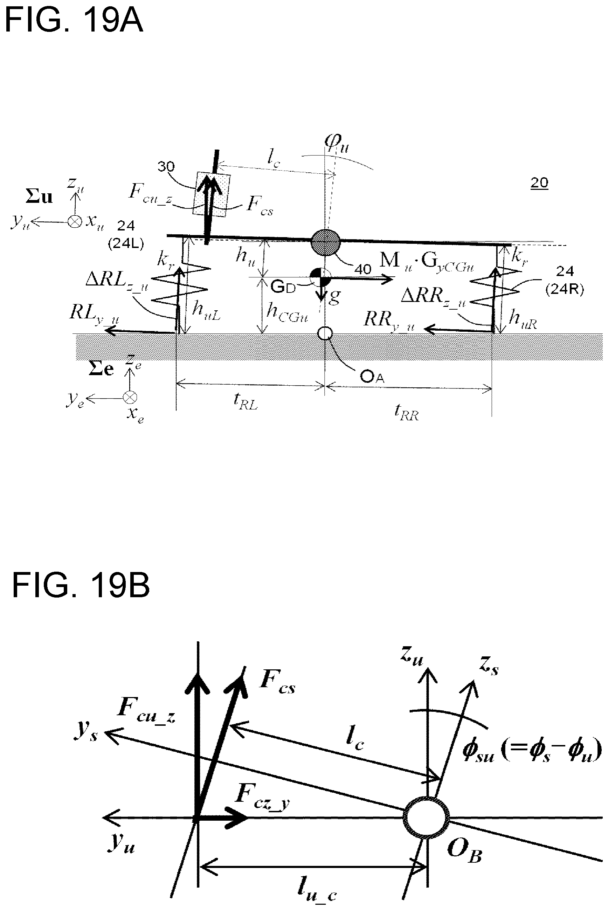

FIG. 19A is a schematic diagram illustrating acting forces relating to unsprung roll motion about a support unit 40, and FIG. 19B is a schematic diagram illustrating a moment generated by hydraulic pressure of a lock cylinder about the support unit 40. Based on FIGS. 19A and 19B, unsprung roll motion about the support unit 40 (about the pin) with respect to Σₑ as viewed from Σᵤ is described below. An unsprung attitude angle φᵤ is assumed to be small, and h_{uL} = h_{uR} (= hₚ + cₚ·sinθ) is assumed. Jᵤ is an inertia tensor about the center-of-gravity position (center of gravity G_{D}) of the unsprung body 20. As illustrated in FIGS. 13A and 13B, hₚ is treated as a constant.
[Math. 13] $\begin{matrix}{\left[{J}_{u}⋅{\dot{ω}}_{u}+{Ω}_{u}⋅{J}_{u}⋅{ω}_{u}\right]}_{Roll} \\ = - {M}_{u} ⋅ \left({G}_{yCGu}+g⋅{sinϕ}_{u}⋅cosθ\right) ⋅ {h}_{u} + \left({RL}_{y _ u}+{RR}_{y _ u}\right) \\ ⋅ \left({h}_{p}+{c}_{p}⋅sinθ\right) - {M}_{u} ⋅ g ⋅ {sinϕ}_{u} ⋅ cos θ ⋅ {h}_{u} + Δ {RL}_{z _ u} ⋅ {t}_{RL} \\ - Δ {RR}_{z _ u} ⋅ {t}_{RR} + {F}_{cs} ⋅ {l}_{c}\end{matrix}$

The moment of lock cylinder hydraulic pressure F_{cs}·l_{c} in Expression (21) is obtained by replacing a moment F_{cu_z}·l_{u_c} about the support unit 40 with Expression (22) as illustrated in FIG. 19B.
[Math. 14] ${F}_{cu _ z} ⋅ {l}_{u _ c} = {F}_{cs} ⋅ {l}_{c}$

### (3) Integration of sprung and unsprung roll motion

When Expression (21) is rearranged to factor out the moment of lock cylinder hydraulic pressure F_{cs}·l_{c}, Expression (23) is obtained.
[Math. 15] $\begin{matrix}{F}_{cs} ⋅ {l}_{C} = {\left[{J}_{u}⋅{\dot{ω}}_{u}+{Ω}_{u}⋅{J}_{u}⋅{Ω}_{u}\right]}_{Roll} + {M}_{u} ⋅ \left({G}_{yCGu}+g⋅{sinϕ}_{u}⋅cosθ\right) ⋅ {h}_{u} + {M}_{u} ⋅ g \\ ⋅ {sinϕ}_{u} ⋅ cos θ ⋅ {h}_{u} - \left({RL}_{y _ u}+{RR}_{y _ u}\right) ⋅ \left({h}_{p}+{c}_{p}⋅sinθ\right) - Δ {RL}_{z _ u} \\ ⋅ {t}_{RL} + Δ {RR}_{z _ u} ⋅ {t}_{RR}\end{matrix}$

When the terms of Expression (23) are coordinate-transformed into Σₛ, substituted into Expression (20), and rearranged, roll motion integrating roll motion of the sprung body 10 and the unsprung body 20 with respect to Σₑ as viewed from Σₛ is expressed by Expression (24). Note that, as in FIG. 19B and Expression (22), a moment (product with t_{RL} and t_{RR}) is the same as viewed from Σₛ and Σᵤ, and thus ΔRL_{z_u} and ΔRR_{z_u} in Expression (24) do not include a subscript (s).
[Math. 16] $\begin{matrix}{\left[{J}_{s}⋅{\dot{ω}}_{s}+{Ω}_{s}⋅{J}_{s}⋅{ω}_{s}\right]}_{Roll} + {{\left[{J}_{u}⋅{\dot{ω}}_{u}+{Ω}_{u}⋅{J}_{u}⋅{ω}_{u}\right]}_{\left(s\right)}}_{Roll} \\ = {M}_{s} ⋅ \left({G}_{yCGs}+g⋅{sinϕ}_{s}⋅cosθ\right) ⋅ {h}_{CGs} - {M}_{s} \\ ⋅ \left({G}_{zCGs}+g⋅{sinϕ}_{s}⋅cosθ\right) ⋅ {d}_{s} ⋅ {M}_{u} \\ ⋅ \left({G}_{yCGu \left(s\right)}+{\left(g⋅{sinϕ}_{u}⋅cosθ\right)}_{\left(s\right)}\right) ⋅ {h}_{CGu} + Δ {FL}_{z _ s} ⋅ {t}_{FL} - Δ {FR}_{z _ s} ⋅ {t}_{FR} \\ + Δ {RL}_{z _ u} ⋅ {t}_{RL} - Δ {RR}_{z _ u} ⋅ {t}_{RR}\end{matrix}$

Expression (24) integrates roll motion of the sprung body 10 and roll motion of the unsprung body 20 into the coordinate system of the inertia system of the sprung body 10 by using internal forces (spring force and lock cylinder hydraulic pressure Fcs) acting between an inertia system of the sprung body 10 and an inertia system of the unsprung body 20 and relative attitude angles between the sprung body 10 and the unsprung body 20. In other words, Expression (24) integrates roll motion of the sprung body 10 and roll motion of the unsprung body 20 into the coordinate system of one of the inertia system of the sprung body 10 and the inertia system of the unsprung body 20.

### 2.7.2. Pitch motion

### (1) Sprung pitch motion

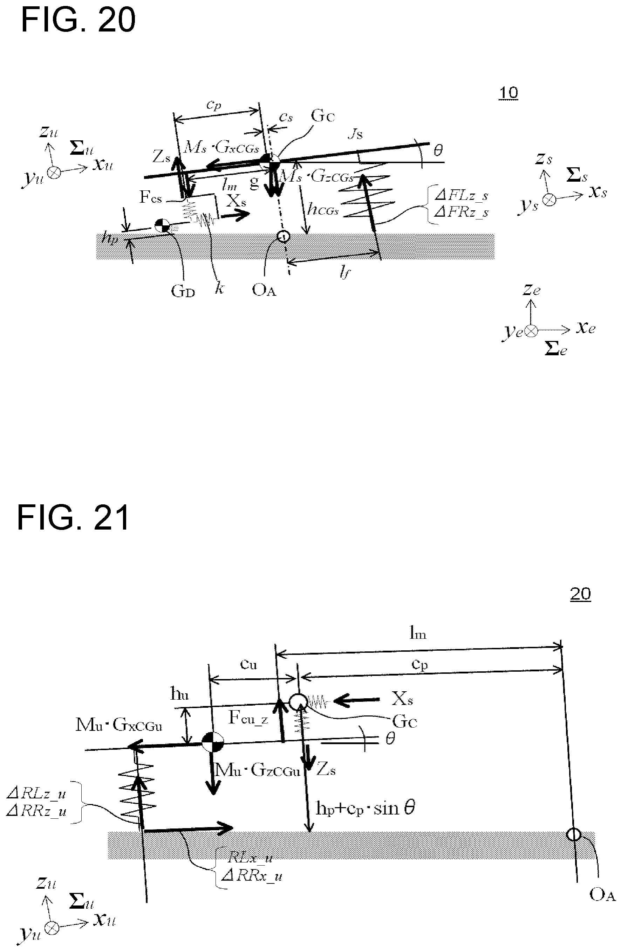

FIG. 20 is an image diagram schematically illustrating acting forces relating to sprung pitch motion about the origin O_{A}. Based on FIG. 20, sprung pitch motion about the origin O_{A} with respect to Σₑ as viewed from Σₛ is expressed by Expression (25). Note that, as illustrated in FIGS. 13A and 13B, tire deformation is assumed to be small, and h_{CGs} and hₚ are treated as constants.
[Math. 17] $\begin{matrix}{\left[{J}_{s}⋅{\dot{ω}}_{s}+{Ω}_{s}⋅{J}_{s}⋅{ω}_{s}\right]}_{pitch} \\ = - {M}_{s} ⋅ \left({G}_{xCGs}-g⋅sinθ\right) ⋅ {h}_{CGs} + {M}_{s} ⋅ \left({G}_{zCGs}+g⋅{cosϕ}_{s}⋅cosθ\right) \\ ⋅ {c}_{s} + k ⋅ \left({x}_{u \left(s\right)}-{x}_{s}\right) ⋅ \left({h}_{p}+{c}_{p}⋅sinθ\right) + k ⋅ \left({z}_{u \left(s\right)}-{z}_{s}\right) ⋅ {c}_{p} \\ - \left(Δ{FL}_{z _ s}+Δ{FR}_{z _ s}\right) ⋅ {l}_{f} - {F}_{cs} ⋅ {l}_{m}\end{matrix}$

A subscript "pitch" on the left-hand side of Expression (25) indicates extraction of the second row in Expression (2). When spring force in Expression (25) is factored out from Expressions (14) and (17), Expressions (26) and (27) are obtained. $\begin{matrix}k ⋅ \left({x}_{u \left(s\right)}-{x}_{s}\right) = - {M}_{u} ⋅ \left({G}_{xCGu \left(s\right)}-{\left(g⋅sinθ\right)}_{\left(s\right)}\right) + {RL}_{x _ u \left(s\right)} + {RR}_{x _ u \left(s\right)} \left(26\right) \\ k ⋅ \left({z}_{u \left(s\right)}-{z}_{s}\right) \\ = - {M}_{u} ⋅ \left({G}_{zCGu \left(s\right)}+{\left(g⋅{cosϕ}_{u}⋅cosθ\right)}_{\left(s\right)}\right) + Δ {RL}_{z _ u \left(s\right)} + Δ {RR}_{z _ u \left(s\right)} \left(27\right) \\ + {F}_{cs}\end{matrix}$

When Expressions (26) and (27) are substituted into Expression (25), Expression (28) is obtained.
[Math. 19] $\begin{matrix}{\left[{J}_{s}⋅{\dot{ω}}_{s}+{Ω}_{s}⋅{J}_{s}⋅{ω}_{s}\right]}_{pitch} \\ = - {M}_{s} ⋅ \left({G}_{xCGs}-g⋅sinθ\right) ⋅ {h}_{CGs} + {M}_{s} ⋅ \left({G}_{zCGs}+g⋅{cosϕ}_{s}⋅cosθ\right) ⋅ {c}_{s} \\ - {M}_{u} ⋅ \left({G}_{xCGu \left(s\right)}-g⋅sinθ\right) ⋅ \left({h}_{p}+{c}_{p}⋅sinθ\right) - {M}_{u} \\ ⋅ \left({G}_{zCGu \left(s\right)}+g⋅cosθ⋅{cosϕ}_{u \left(s\right)}\right) ⋅ {c}_{p} - \left(Δ{FL}_{z _ s}+Δ{FR}_{z _ s}\right) ⋅ {l}_{f} \\ + \left(Δ{RL}_{z _ u \left(s\right)}+Δ{RR}_{z _ u \left(s\right)}\right) ⋅ {c}_{p} + \left({RL}_{x _ u \left(s\right)}+{RR}_{x _ u \left(s\right)}\right) \\ ⋅ \left({h}_{p}+{c}_{p}⋅tanθ\right) + {F}_{cs} ⋅ \left({c}_{p}-{l}_{m}\right)\end{matrix}$

### (2) Unsprung pitch motion

FIG. 21 is a schematic diagram illustrating acting forces relating to unsprung pitch motion about an origin O_{B}. Based on FIG. 21, unsprung pitch motion about the origin O_{B} with respect to Σₑ as viewed from Σᵤ is expressed by Expression (29). However, the moment of lock cylinder hydraulic pressure is replaced with F_{cs}·(lₘ - cₚ) as viewed from Σₛ, in the same manner as Expression (22).
[Math. 20] $\begin{matrix}{\left[{J}_{u}⋅{\dot{ω}}_{u}+{Ω}_{u}⋅{J}_{u}⋅{ω}_{u}\right]}_{pitch} = {M}_{u} ⋅ \left({G}_{xCGu}-g⋅sinθ\right) ⋅ {h}_{u} - {M}_{u} \\ ⋅ \left({G}_{zCGu}-g⋅cosθ⋅{cosϕ}_{u}\right) ⋅ {c}_{u} + {F}_{cs} ⋅ \left({l}_{m}-{c}_{p}\right) \\ + \left(Δ{RL}_{z _ u}+Δ{RR}_{z _ u}\right) \left({l}_{r}-{c}_{p}\right) - \left({RL}_{x _ u}+{RR}_{x _ u}\right) ⋅ \left({h}_{p}+{c}_{p}⋅sinθ\right)\end{matrix}$

### (3) Integration of sprung and unsprung pitch motion

When Expression (29) is rearranged to factor out the moment of lock cylinder hydraulic pressure F_{cs}·(lₘ - cₚ), Expression (30) is obtained.
[Math. 21] $\begin{matrix}{F}_{cs} ⋅ \left({c}_{p}-{l}_{m}\right) = - {\left[{J}_{u}⋅{\dot{ω}}_{u}+{Ω}_{u}⋅{J}_{u}⋅{ω}_{u}\right]}_{pitch} + {M}_{u} ⋅ \left({G}_{xCGu}-g⋅sinθ\right) ⋅ {h}_{u} - {M}_{u} \\ ⋅ \left({G}_{zCGu}-g⋅cosθ⋅{cosϕ}_{u}\right) ⋅ {c}_{u} + \left(Δ{RL}_{z _ u}+Δ{RR}_{z _ u}\right) \left({l}_{r}-{c}_{p}\right) \\ - \left({RL}_{x _ u}+{RR}_{x _ u}\right) ⋅ \left({h}_{p}+{c}_{p}⋅sinθ\right)\end{matrix}$

When Expression (30) is substituted into Expression (28) and rearranged, pitch motion of the sprung body 10 and the unsprung body 20 with respect to Σₑ as viewed from Σₛ is expressed by Expression (31).
[Math. 22] $\begin{matrix}{\left[{J}_{s}⋅{\dot{ω}}_{s}+{Ω}_{s}⋅{J}_{s}⋅{ω}_{s}\right]}_{pitch} + {\left[{J}_{u}⋅{\dot{ω}}_{u}+{Ω}_{u}+{J}_{u}⋅{ω}_{u}\right]}_{\left(s\right) pitch} \\ = - {M}_{s} ⋅ \left({G}_{xCGs}-g⋅sinθ\right) ⋅ {h}_{CGs} + {M}_{s} ⋅ \left({G}_{zCGs}+g⋅{cosϕ}_{s}⋅cosθ\right) ⋅ {c}_{s} \\ - {M}_{u} ⋅ \left({G}_{zCGu \left(s\right)}+{\left(g⋅{cosϕ}_{u}⋅cosθ\right)}_{\left(s\right)}\right) \\ ⋅ \left({c}_{p}+{c}_{u}\right) - {M}_{u} ⋅ \left({G}_{xCGu \left(s\right)}-\left.{\left(g⋅sinθ\right)}_{\left(s\right)}\right)\right) ⋅ \left({h}_{CGu}+{c}_{p}⋅sinθ\right) \\ - \left(Δ{FL}_{z _ s}+Δ{FR}_{z _ s}\right) ⋅ {l}_{f} + \left(Δ{RL}_{z _ u \left(s\right)}+Δ{RR}_{z _ u \left(s\right)}\right) {l}_{r}\end{matrix}$

Expression (31) integrates pitch motion of the sprung body 10 and pitch motion of the unsprung body 20 into the coordinate system of the inertia system of the sprung body 10 by using internal forces (spring force and lock cylinder hydraulic pressure Fcs) acting between the inertia system of the sprung body 10 and the inertia system of the unsprung body 20 and relative attitude angles between the sprung body 10 and the unsprung body 20. In other words, Expression (31) integrates pitch motion of the sprung body 10 and pitch motion of the unsprung body 20 into the coordinate system of one of the inertia system of the sprung body 10 and the inertia system of the unsprung body 20.

### 2.8. Roll stiffness distribution

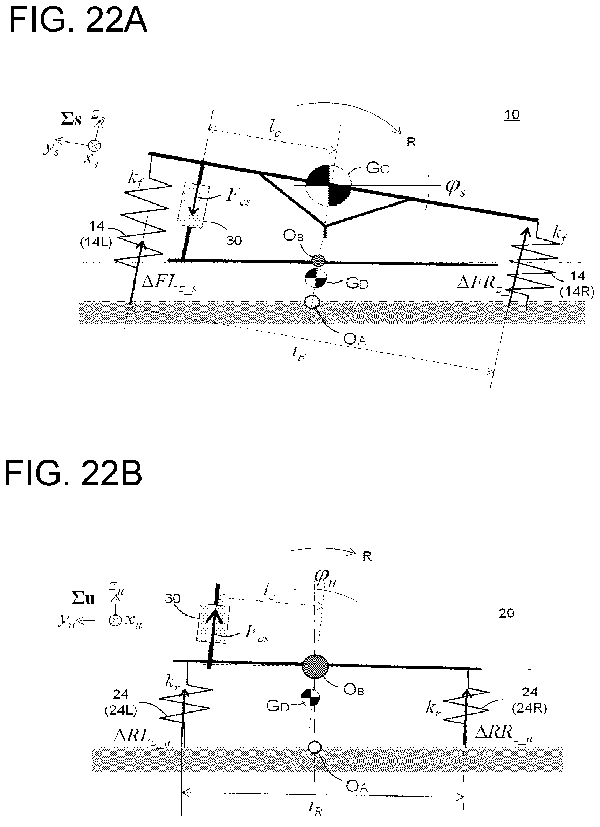

FIG. 22A is a schematic diagram illustrating acting forces during turning roll in the sprung body 10, and FIG. 22B is a schematic diagram illustrating acting forces during turning roll in the unsprung body 20. FIGS. 22A and 22B illustrates changes in the wheel loads of the front wheel 14 (the left front wheel 14L and the right front wheel 14R) and the rear wheel 24 (the left rear wheel 24L and the right rear wheel 24R) of the forklift truck 1A during turning roll, and an action image of hydraulic pressure due to cylinder locking of the actuator 30. Note that illustration of actions of tire lateral force, inertial force, and the like is omitted.

Based on FIGS. 22A and 22B, a relationship among the wheel loads, the cylinder hydraulic pressure, and roll stiffness is expressed by Expressions (32) and (33). $\begin{matrix}\begin{matrix}{t}_{F} / 2 ⋅ \left(Δ{FL}_{z}-Δ{FR}_{z}\right) : {t}_{R} / 2 ⋅ \left(Δ{RL}_{z _ u \left(s\right)}-Δ{RR}_{z _ u \left(s\right)}\right) \\ = \left({F}_{cs}⋅{l}_{c}+{k}_{f}⋅{{t}_{F}}^{2}/2⋅{φ}_{s}\right) : \left(-{F}_{cs}⋅{l}_{c}+{k}_{r}⋅{{t}_{R}}^{2}/2⋅{φ}_{u}\right)\end{matrix} & \left(32\right) \\ {α}_{R} ⋅ {t}_{F} ⋅ \left(Δ{FL}_{z}-Δ{FR}_{z}\right) + {α}_{F} ⋅ {t}_{R} ⋅ \left(Δ{RL}_{z _ u \left(s\right)}-Δ{RR}_{z _ u \left(s\right)}\right) = 0 & \left(33\right)\end{matrix}$

From Expressions (32) and (33), roll stiffness distributions α_{R} and α_{F} are expressed by Expressions (34) and (35) by using the lock cylinder hydraulic pressure Fcs, the sprung body roll angle φₛ, and the unsprung body roll angle φᵤ. Accordingly, roll stiffness distributions relating to independent roll motion of the sprung body 10 and the unsprung body 20 is calculated. $\begin{matrix}{α}_{R} = \frac{- 2 {F}_{cs} ⋅ {l}_{c} + {k}_{r} ⋅ {{t}_{R}}^{2} ⋅ {φ}_{u}}{{k}_{r} ⋅ {{t}_{R}}^{2} ⋅ {φ}_{u} + {k}_{f} ⋅ {{t}_{F}}^{2} ⋅ {φ}_{s}} & \left(34\right) \\ {a}_{F} = 1 - {α}_{R} & \left(35\right)\end{matrix}$

2.9. Acceleration at center-of-gravity positions of sprung body 10 and unsprung body 20

### 2.9.1. Acceleration at center-of-gravity position of sprung body 10

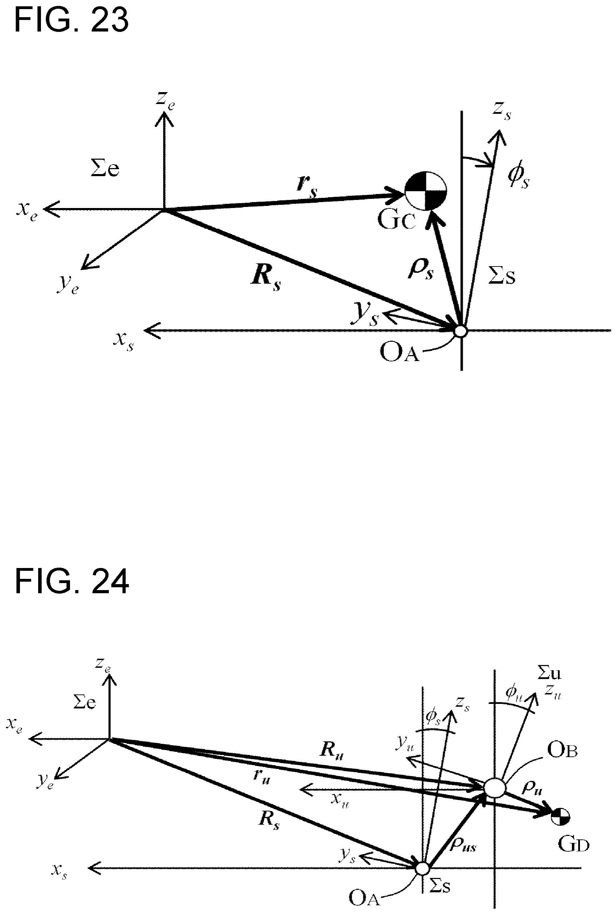

FIG. 23 is a diagram illustrating the center-of-gravity position of the sprung body 10 as viewed from Σₑ and Σₛ. A method of calculating acceleration at the center-of-gravity position of the sprung body 10 (center of gravity Gc) in Σₛ will be described below with reference to FIGS. 22A and 22B.

When the position vector of the center of gravity Gc of the sprung body 10 as viewed from Σₛ is defined as ρₛ, the position vector of the origin O_{A} with respect to Σₑ is defined as Rₛ, and the position vector of the center of gravity Gc with respect to Σₑ is defined as rₛ, Expression (36) holds.
[Math. 25] ${r}_{s} = {R}_{s} + {ρ}_{s}$

When a translational velocity of Σₛ with respect to Σₑ as viewed from Σₛ is defined as R·ₛ (in expressions, R with a single dot above it; the same applies to "r" below) and a rotational velocity of Σₛ is defined as ωₛ, a sprung center-of-gravity velocity R·ₛ of Σₛ with respect to Σₑ as viewed from Σₛ is expressed by Expression (37).
[Math. 26] ${\dot{r}}_{s} = {\dot{R}}_{s} + {ω}_{s} \times {ρ}_{s}$

In Expression (37), × represents a cross product, and R·ₛ, ωₛ, ρₛ, and r_{··s} (in expressions, r with a double dot above it) are expressed by Expressions (38) to (41). $\begin{matrix}{\dot{R}}_{s} = {U}_{s} {i}_{s} + {V}_{s} {j}_{s} + {W}_{s} {k}_{s} & \left(38\right) \\ {ω}_{s} = {P}_{s} {i}_{s} + {Q}_{s} {j}_{s} + {R}_{s} {k}_{s} & \left(39\right) \\ {ρ}_{s} = {c}_{s} {i}_{s} + {d}_{s} {j}_{s} + {h}_{s} {k}_{s} & \left(40\right) \\ {{r}^{¨}}_{s} = {G}_{xCGs} {i}_{s} + {G}_{yCGs} {j}_{s} + {G}_{zCGs} {k}_{s} & \left(41\right)\end{matrix}$

From Expression (11), sprung center-of-gravity accelerations G_{xCGs}, G_{yCGs}, and G_{zCGs} in respective axial directions of Σₛ are expressed by Expressions (42) to (44). $\begin{matrix}{G}_{xCGs} = {\dot{U}}_{s} - {V}_{s} {R}_{s} + {W}_{s} {Q}_{s} + {\dot{Q}}_{s} {h}_{s} - {\dot{R}}_{s} {d}_{s} + {P}_{s} {R}_{s} {h}_{s} - {{R}_{s}}^{2} {c}_{s} + {P}_{s} {Q}_{s} {d}_{s} - {{Q}_{s}}^{2} {c}_{s} & \left(42\right) \\ {G}_{yCGs} = {\dot{V}}_{s} + {U}_{s} {R}_{s} - {W}_{s} {P}_{s} - {\dot{P}}_{s} {h}_{s} + {\dot{R}}_{s} {c}_{s} + {Q}_{s} {R}_{s} {h}_{s} - {{R}_{s}}^{2} {d}_{s} - {{P}_{s}}^{2} {d}_{s} + {Q}_{s} {P}_{s} {c}_{s} & \left(43\right) \\ {G}_{zCGs} = {\dot{W}}_{s} - {U}_{s} {Q}_{s} + {V}_{s} {P}_{s} + {\dot{P}}_{s} {d}_{s} - {\dot{Q}}_{s} {c}_{s} - {{Q}_{s}}^{2} {h}_{s} + {R}_{s} {Q}_{s} {d}_{s} - {{P}_{s}}^{2} {h}_{s} + {R}_{s} {P}_{s} {c}_{s} & \left(44\right)\end{matrix}$

### 2.9.2. Acceleration at center-of-gravity position of unsprung body 20

FIG. 24 is a diagram illustrating the center-of-gravity position of the unsprung body 20 as viewed from Σₑ, Σₛ, and Σᵤ. A model equation for wheel load estimation is constructed based on motion of the sprung body 10 and the unsprung body 20 as viewed from the sprung coordinate system Σₛ. Thus, motion of the unsprung body 20 as viewed from Σᵤ needs to be transformed into motion of the sprung body 10 as viewed from Σₛ. A method of deriving acceleration at the center-of-gravity position of the unsprung body 20 (center of gravity G_{D}) of Σᵤ with respect to Σₑ as viewed from Σₛ will be described below with reference to FIG. 24.

When the position vector of the center of gravity G_{D} of the unsprung body as viewed from Σᵤ is defined as rᵤ, the position vector of Σᵤ with respect to Σₑ is defined as Rᵤ, the position vector of the origin O_{B} as viewed from Σₛ is defined as rᵤₛ, and the position vector of the center of gravity G_{D} with respect to Σₑ is defined as rᵤ, Expression (48) holds.
[Math. 29] ${r}_{u} = {R}_{u} + {ρ}_{u} = {R}_{s} + {ρ}_{us} + {ρ}_{u}$

In Expression (48), ρᵤₛ and ρᵤ are expressed by Expressions (49) and (50). $\begin{matrix}{ρ}_{us} = {c}_{p} {i}_{s} + {d}_{p} {j}_{s} + {h}_{p} {k}_{s} & \left(49\right) \\ {ρ}_{u} = {h}_{u} {k}_{u} & \left(50\right)\end{matrix}$

In Expression (50), hᵤ is a zᵤ axis component of ρᵤ and is a zᵤ axis coordinate of an unsprung center of gravity G_{B} as viewed from Σᵤ. Note that xᵤ and yᵤ axis components cᵤ and dᵤ of ρᵤ are approximately set to zero since the unsprung center of gravity G_{B} is located directly below the origin O_{B}. In addition, kᵤ is a basis vector in a zᵤ-axis direction of Σᵤ with respect to Σₑ.

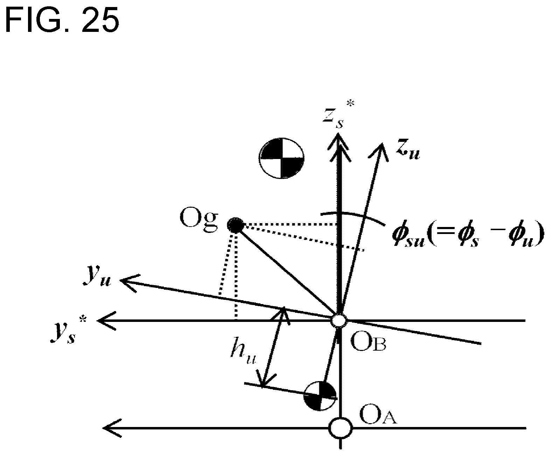

FIG. 25 is a diagram illustrating rotation of coordinates by the relative roll angle φₛᵤ. Since ρᵤ is a position vector as viewed from Σᵤ, ρᵤ is coordinate-transformed into a position vector as viewed from Σₛ by using a relative roll angle φsᵤ between Σₛ and Σᵤ with respect to Σₑ illustrated in FIG. 25. In FIG. 25, coordinates obtained by sliding Σₛ with the origin O_{A} to the origin O_{B} are illustrated as yₛ*-zₛ* coordinates. Accordingly, Expressions (51) and (52) hold. $\begin{matrix}{i}_{u} = {i}_{e} & \left(51\right) \\ \left[\begin{matrix}{j}_{u} \\ {k}_{u}\end{matrix}\right] = \left[\begin{matrix}{cosϕ}_{su} & {sinϕ}_{su} \\ - {sinϕ}_{su} & {cosϕ}_{su}\end{matrix}\right] \left[\begin{matrix}{j}_{s} \\ {k}_{s}\end{matrix}\right] & \left(52\right)\end{matrix}$

When kᵤ in Expression (52) is substituted into Expression (17), the position vector ρᵤ of Σᵤ with respect to Σₑ as viewed from Σₛ is expressed by Expression (53). However, a slide amount of zₛ* with respect to Σₛ is added. In Expression (53), a subscript (s) of ρᵤ₍ₛ₎ indicates coordinate transformation from Σᵤ to Σₛ (the same applies hereinafter).
[Math. 32] ${ρ}_{u \left(s\right)} = {h}_{u} \left(-{j}_{s}⋅{sinϕ}_{su}+{k}_{s}⋅{cosϕ}_{su}\right) + {h}_{p} {k}_{s}$

Expression (54) is an expression obtained by replacing ρᵤ in Expression (48) with ρᵤ₍ₛ₎ in Expression (53), and rewriting rᵤ in Expression (48) as an unsprung center-of-gravity position vector rᵤ₍ₛ₎ of Σᵤ with respect to Σₑ as viewed from Σₛ.
[Math. 33] ${r}_{u \left(s\right)} = {R}_{s} + {ρ}_{us} + {ρ}_{u \left(s\right)}$

Expression (55) is obtained by differentiating Expression (54), and is an expression representing an unsprung center-of-gravity velocity r·ᵤ₍ₛ₎ (in expressions, r with a single dot above it) of Σᵤ with respect to Σₑ as viewed from Σₛ.
[Math. 34] ${\dot{r}}_{u \left(s\right)} = {\dot{R}}_{s} + {\dot{ρ}}_{u \left(s\right)} + {ω}_{s} \times {ρ}_{us} + {ω}_{u \left(s\right)} \times {ρ}_{u \left(s\right)}$

Expressions (56) to (58) are expressions representing ρ·ᵤ₍ₛ₎ (in expressions, ρ with a single dot above it), ωᵤ, and ωᵤ₍ₛ₎ in Expression (55). $\begin{matrix}\begin{matrix}{\dot{ρ}}_{u \left(s\right)} = \left(\left({h}_{u}⋅{cosϕ}_{su}+{h}_{p}\right){Q}_{s}+{h}_{u}⋅{sinϕ}_{su}{R}_{s}\right) {i}_{s} \\ - \left({\dot{ϕ}}_{su}{h}_{u}⋅{cosϕ}_{su}+\left({h}_{u}⋅{cosϕ}_{su}+{h}_{p}\right){P}_{s}\right) {j}_{s} - {h}_{u} ⋅ {sinϕ}_{su} {P}_{s} {k}_{s} \left(56\right)\end{matrix} \\ {ω}_{u} = {P}_{u} {i}_{s} + {Q}_{s} {j}_{u} + {R}_{s} {k}_{u} \left(57\right) \\ {ω}_{u \left(s\right)} = {P}_{u} {i}_{s} + \left({Q}_{s}⋅{cosϕ}_{su}-{R}_{s}⋅{sinϕ}_{su}\right) {j}_{s} + \left({Q}_{s}⋅{sinϕ}_{su}+{R}_{s}⋅{cosϕ}_{su}\right) {k}_{s} \left(58\right)\end{matrix}$

When Expression (55) is rewritten by using Expressions (38), (39), (49), (53), (56), and (58), the following expression is obtained.
[Math. 36] $\begin{matrix}{\dot{r}}_{u \left(s\right)} = \left[{U}_{s}+\left({h}_{p}+{h}_{u}\right)\left(1+{cosϕ}_{su}\right){Q}_{s}+\left(\left({h}_{u}-{h}_{p}\right){sinϕ}_{su}-{d}_{p}\right){R}_{s}\right] {i}_{s} \\ + \left[{V}_{s}-{h}_{p}{P}_{u}+{c}_{p}{R}_{s}-{\dot{ϕ}}_{su}{h}_{u}⋅{cosϕ}_{su}\right] {j}_{s} \\ + \left[{W}_{s}-{h}_{u}{sinϕ}_{su}\left({P}_{s}+{P}_{u}\right)+{P}_{s}{d}_{p}-{Q}_{s}{c}_{p}\right] {k}_{s}\end{matrix}$

Expression (60) is obtained by differentiating Expression (55), and represents an unsprung center-of-gravity acceleration r_{··u(s)} (in expressions, r with a double dot above it) of Σᵤ with respect to Σₑ as viewed from Σₛ.
[Math. 37] ${{r}^{¨}}_{u \left(s\right)} = {G}_{xCGu \left(s\right)} {i}_{s} + {G}_{yCGu \left(s\right)} {j}_{s} + {G}_{zCGu \left(s\right)} {k}_{s}$

Expressions (61) to (63) are expressions representing unsprung center-of-gravity accelerations G_{xCGu(s)}, G_{yCGu(s)}, and G_{zCGu(s)} in Expression (60), respectively. $\begin{matrix}\begin{matrix}{G}_{xCGu \left(s\right)} = {\dot{U}}_{s} - {V}_{s} {R}_{s} + {W}_{s} {Q}_{s} + \left({h}_{p}+{h}_{u}\right) {\dot{Q}}_{s} - {d}_{p} {\dot{R}}_{s} - {c}_{p} \left({{R}_{s}}^{2}+{{Q}_{s}}^{2}\right) + {P}_{s} {Q}_{s} {d}_{p} \\ + {h}_{P} {P}_{u} {R}_{s} + {\dot{ϕ}}_{su} {R}_{s} {h}_{u} ⋅ {cosϕ}_{su} - {h}_{u} {sinϕ}_{su} \left({P}_{s}+{P}_{u}\right) {Q}_{s} \\ - {\dot{ϕ}}_{su} \left({h}_{p}+{h}_{u}\right) {Q}_{s} + \left({h}_{p}+{h}_{u}\right) {cosϕ}_{su} {\dot{Q}}_{s} + \left({h}_{u}-{h}_{p}\right) {sinϕ}_{su} {\dot{R}}_{s} \\ + {\dot{ϕ}}_{su} \left({h}_{u}-{h}_{p}\right) {cosϕ}_{su} {R}_{s} \left(61\right)\end{matrix} \\ \begin{matrix}{G}_{yCGu \left(s\right)} = {\dot{V}}_{s} + {U}_{s} {R}_{s} - {W}_{s} {P}_{s} + \left({h}_{p}+{h}_{u}\right) {Q}_{s} {R}_{s} + {c}_{p} {\dot{R}}_{s} - {d}_{p} {{R}_{s}}^{2} - {{P}_{x}}^{2} {d}_{p} + {P}_{s} {Q}_{s} {c}_{p} \\ - {h}_{p} {\dot{P}}_{u} - {{ϕ}^{¨}}_{su} {h}_{u} ⋅ {cosϕ}_{su} + {{\dot{ϕ}}_{su}}^{2} {h}_{u} ⋅ {sinϕ}_{su} + \left({h}_{p}+{h}_{u}\right) {cosϕ}_{su} {Q}_{s} {R}_{s} \\ + \left(\left({h}_{u}-{h}_{p}\right){sinϕ}_{su}\right) {{R}_{s}}^{2} + {h}_{u} {sinϕ}_{su} \left({{P}_{s}}^{2}+{P}_{s}{P}_{u}\right) \left(62\right)\end{matrix} \\ \begin{matrix}{G}_{zCGu \left(s\right)} = {\dot{W}}_{s} - {U}_{s} {Q}_{s} + {V}_{s} {P}_{s} + {\dot{P}}_{s} {d}_{p} - {\dot{Q}}_{s} {c}_{p} + {c}_{p} {R}_{s} {P}_{s} - \left({h}_{p}+{h}_{u}\right) {Q}_{s}^{2} + {d}_{p} {R}_{s} {Q}_{s} \\ - {h}_{u} {sinϕ}_{su} \left({P}_{s}+{P}_{u}\right) - {\dot{ϕ}}_{su} {h}_{u} {cosϕ}_{su} \left({P}_{s}+{P}_{u}\right) - \left({h}_{p}+{h}_{u}\right) {cosϕ}_{su} {Q}_{s}^{2} \\ - \left({h}_{u}-{h}_{p}\right) {sinϕ}_{su} {R}_{s} {Q}_{s} - {h}_{p} {P}_{u} {P}_{s} - {ϕ}_{su} {h}_{u} ⋅ {cosϕ}_{su} {P}_{s} \left(63\right)\end{matrix}\end{matrix}$

In Expressions (61) to (63), acceleration at the center-of-gravity position of the unsprung body 20 is center-of-gravity acceleration of the unsprung coordinate system Σᵤ with respect to Σₑ as viewed from the sprung coordinate system Σₛ, and G_{xCGu(s)}, G_{yCGu(s)}, and G_{zCGu(s)} are calculated by using G_{xCGs}, G_{yCGs}, and G_{zCGs}. Hereinafter, a procedure will be described by using G_{xCGu(s)} as an example. Expression (64) is identical to Expression (42).
[Math. 39] ${G}_{xCGs} = {\dot{U}}_{s} - {V}_{s} {R}_{s} + {W}_{s} {Q}_{s} + {\dot{Q}}_{s} {h}_{s} - {\dot{R}}_{s} {d}_{s} + {P}_{s} {R}_{s} {h}_{s} - {R}_{s}^{2} {c}_{s} + {P}_{s} {Q}_{s} {d}_{s} - {Q}_{s}^{2} {c}_{s}$

Expression (65) is an expression obtained by rearranging Expression (64), and since terms up to the third item on the right hand side are common when Expressions (61) and (64) are compared, the following is extracted from G_{xCGs}.
[Math. 40] $\begin{matrix}{\dot{U}}_{s} - {V}_{s} {R}_{s} + {W}_{s} {Q}_{s} = {G}_{xCGs} - \left({\dot{Q}}_{s}{h}_{s}-{\dot{R}}_{s}{d}_{s}+{P}_{s}{R}_{s}{h}_{s}-{{R}_{s}}^{2}{c}_{s}+{P}_{s}{Q}_{s}{d}_{s}-{{Q}_{s}}^{2}{c}_{s}\right) \\ = {G}_{xCGs} - {G}_{xCGs _ other}\end{matrix}$

Expression (66) is an expression representing G_{xCGs_other} in Expression (65).
[Math. 41] ${G}_{xUVWs _ other} = {\dot{Q}}_{s} {h}_{s} - {\dot{R}}_{s} {d}_{s} + {P}_{s} {R}_{s} {h}_{s} - {{R}_{s}}^{2} {c}_{s} + {P}_{s} {Q}_{s} {d}_{s} - {{Q}_{s}}^{2} {c}_{s}$

Expression (67) is an expression obtained by substituting Expression (65) into Expression (61).
[Math. 42] ${G}_{xCGu \left(s\right)} = {G}_{xCGs} - {G}_{xCGs _ other} + {G}_{xCGu _ other \left(s\right)}$

Expression (68) is an expression representing G_{xCGu_other(s)} in Expression (67).
[Math. 43] $\begin{matrix}{G}_{xCGu _ other \left(s\right)} = \left({h}_{p}+{h}_{u}\right) {\dot{Q}}_{s} - {d}_{p} {\dot{R}}_{s} - {c}_{p} \left({{R}_{s}}^{2}+{{Q}_{s}}^{2}\right) + {P}_{s} {Q}_{s} {d}_{p} + {h}_{p} {P}_{u} {R}_{s} \\ + {\dot{ϕ}}_{su} {R}_{s} {h}_{u} ⋅ {cosϕ}_{su} - {h}_{u} {sinϕ}_{su} \left({P}_{s}+{P}_{u}\right) {Q}_{s} - {\dot{ϕ}}_{su} \left({h}_{P}+{h}_{u}\right) {Q}_{s} \\ + \left({h}_{P}+{h}_{u}\right) {cosϕ}_{su} {\dot{Q}}_{s} + \left({h}_{u}-{h}_{p}\right) {sinϕ}_{su} {\dot{R}}_{s} + {\dot{ϕ}}_{su} \left({h}_{u}-{h}_{p}\right) {cosϕ}_{su} {R}_{s}\end{matrix}$

Expressions (69) to (71) are expressions for calculating G_{xCGu(s)}, G_{yCGu(s)}, and G_{zCGu(s)} by using G_{xCGs}, G_{yCGs}, and G_{zCGs}. $\begin{matrix}{G}_{xCGu \left(s\right)} = {G}_{xCGs} - {G}_{xCGs _ other} + {G}_{xCGu _ other \left(s\right)} \left(69\right) \\ {G}_{yCGu \left(s\right)} = {G}_{yCGs} - {G}_{yCGs _ other} + {G}_{yCGu _ other \left(s\right)} \left(70\right) \\ {G}_{zCGu \left(s\right)} = {G}_{zCGs} - {G}_{zCGs _ other} + {G}_{zCGu _ other \left(s\right)} \left(71\right)\end{matrix}$

### 2.10. Measured values of acceleration at center-of-gravity positions of sprung body 10 and unsprung body 20

Expressions (72) to (74) are expressions representing acceleration measured values S_{xGCs}, S_{yCGs}, and S_{zCGs} at the center-of-gravity position of the sprung body 10, including gravity components due to sprung attitude angles, by using G_{xCGs}, G_{yCGs}, and G_{zCGs}. $\begin{matrix}{S}_{xCGs} = {G}_{xCGs} - g ⋅ sin θ & \left(72\right) \\ {S}_{yCGs} = {G}_{yCGs} + g ⋅ {sinϕ}_{s} ⋅ cos θ & \left(73\right) \\ {S}_{zCGs} = {G}_{zCGs} + g ⋅ {cosϕ}_{s} ⋅ cos θ & \left(74\right)\end{matrix}$

In Expressions (72) to (74), acceleration measured values at the IMU 51 are converted into acceleration at the center-of-gravity position. Expressions (72) to (74) are obtained by converting IMU measured values into acceleration at the center-of-gravity position. Conversion expressions from IMU acceleration measured values to sprung center-of-gravity acceleration measured values are as follows. $\begin{matrix}\frac{{d}^{2} {r}_{s}}{d {t}^{2}} = \frac{{d}^{2} {r}_{IMUs}}{d {t}^{2}} + {\left(\frac{d {{ω}_{s}}^{T}}{d t}\times Δ{r}_{s}\right)}^{T} + {{ω}_{s}}^{T} \times {\left({{ω}_{s}}^{T}\times Δ{r}_{s}\right)}^{T} \left(75\right) \\ \frac{{d}^{2} {r}_{s}}{d {t}^{2}} = {\left({S}_{xCGs} {S}_{yCGs} {S}_{zCGs}\right)}^{T} \left(76\right) \\ \frac{{d}^{2} {r}_{IMUs}}{d {t}^{2}} = {\left({S}_{xIMUs} {S}_{yIMUs} {S}_{zIMUs}\right)}^{T} \left(77\right) \\ {ω}_{s} = {\left({P}_{s} {Q}_{s} {R}_{s}\right)}^{T} \left(78\right) \\ \frac{d {ω}_{s}}{d t} = {\left({\dot{P}}_{s} {\dot{Q}}_{s} {\dot{R}}_{s}\right)}^{T} \left(79\right) \\ Δ {r}_{s} = \left({c}_{s}-{x}_{IMUs} {d}_{s}-{y}_{IMUs} {h}_{s}-{z}_{IMUs}\right) \left(80\right)\end{matrix}$

Expressions (81) to (83) are expressions representing unsprung acceleration measured values S_{xCGu(s)}, Sy_{CGu(s)}, and S_{zCGu(s)} of Σᵤ with respect to Σₑ as viewed from Σₛ, including gravity components due to unsprung attitude angles. $\begin{matrix}{S}_{xCGu \left(s\right)} = {G}_{xCGu \left(s\right)} - g ⋅ sin θ & \left(81\right) \\ {S}_{yCGu \left(s\right)} = {G}_{yCGu \left(s\right)} + g ⋅ {sinϕ}_{su} ⋅ cos θ & \left(82\right) \\ {S}_{zCGu \left(s\right)} = {G}_{zCGu \left(s\right)} + g ⋅ {cosϕ}_{su} ⋅ cos θ & \left(83\right)\end{matrix}$

**In** Expressions (81) to (83), G_{xCGu(s)}, G_{yCGu(s)}, and G_{zCGu(s)} is expressed by Expressions (84) to (86) based on relationships of Expressions (69) to (74). $\begin{matrix}{G}_{xCGu \left(s\right)} = {S}_{xCGs} + g ⋅ sin θ - {G}_{xCGs _ other} + {G}_{xCGu _ other \left(s\right)} \left(84\right) \\ {G}_{yCGu \left(s\right)} = {S}_{yCGs} - g ⋅ {sinϕ}_{s} ⋅ cos θ - {G}_{yUVWs _ other} + {G}_{yUVWu _ other \left(s\right)} \left(85\right) \\ {G}_{zCGu \left(s\right)} = {S}_{zCGs} - g ⋅ {cosϕ}_{s} ⋅ cos θ - {G}_{zUVWs _ other} + {G}_{zUVWu _ other} \left(86\right)\end{matrix}$

The unsprung acceleration measured values in Expressions (81) to (83) is expressed by Expressions (87) to (89) by using Expressions (84) to (86). $\begin{matrix}{S}_{xCGu \left(s\right)} = {S}_{xCGs} - {G}_{xCGs _ other} + {G}_{xCGu _ other \left(s\right)} \left(87\right) \\ {S}_{yCGu \left(s\right)} = {S}_{yCGs} - g ⋅ \left({sinϕ}_{s}-{sinϕ}_{su}\right) ⋅ cos θ - {G}_{yUVWs _ other} + {G}_{yUVWu _ other \left(s\right)} \left(88\right) \\ {S}_{zCGu \left(s\right)} = {S}_{zCGs} - g ⋅ \left({cosϕ}_{s}-{cosϕ}_{su}\right) ⋅ cos θ - {G}_{zUVWs _ other} + {G}_{zUVWu _ other \left(s\right)} \left(89\right)\end{matrix}$

Accordingly, the unsprung acceleration measured values is calculated from measured values at the IMU 51 in the sprung body 10 and measured values of the relative roll angle φₛᵤ.

### 2.11. Wheel load estimation formula

A wheel load estimation formula will be described next.

Expressions (90) and (91) are expressions obtained by rewriting Expressions (24) and (31) by using Expressions (72) to (74) and (81) to (83). In other words, Expressions (90) and (91) are expressions obtained by rewriting Expression (24), which integrates roll motion of the sprung body 10 and roll motion of the unsprung body 20, and Expression (31), which integrates pitch motion of the sprung body 10 and pitch motion of the unsprung body 20. Note that subscripts "Roll" and "Pitch" on the left-hand sides of Expressions (90) and (91) indicate extraction of the first and second rows in Expression (2). $\begin{matrix}\begin{matrix}{\left[{J}_{s}⋅{\dot{ω}}_{s}+{Ω}_{s}⋅{J}_{s}⋅{ω}_{s}\right]}_{Roll} \\ = {M}_{s} ⋅ {S}_{yCGs} ⋅ {h}_{CGs} - {M}_{s} ⋅ {S}_{zCGs} ⋅ {d}_{s} + {M}_{u} ⋅ {S}_{yCGu \left(s\right)} ⋅ {h}_{CGu} + Δ {FL}_{z _ s} \\ ⋅ {t}_{FL} - Δ {FR}_{z _ s} ⋅ {t}_{FR} + Δ {RL}_{z _ u} ⋅ {t}_{RL} - Δ {RR}_{z _ u} ⋅ {t}_{RR} \left(90\right)\end{matrix} \\ \begin{matrix}{\left[{J}_{s}⋅{\dot{ω}}_{s}+{Ω}_{s}⋅{J}_{s}⋅{ω}_{s}\right]}_{pitch} \\ = - {M}_{s} ⋅ {S}_{xCGs} {h}_{CGs} + {M}_{s} ⋅ {S}_{zCGs} ⋅ {c}_{s} - {M}_{u} ⋅ {S}_{xCGu \left(s\right)} ⋅ {h}_{CGu} - {M}_{u} \\ ⋅ {S}_{zCGu \left(s\right)} ⋅ \left({c}_{p}+{c}_{u}\right) - \left(Δ{FL}_{z _ s}+Δ{FR}_{z _ s}\right) ⋅ {l}_{f} + \left(Δ{RL}_{z _ u}+Δ{RR}_{z _ u}\right) {l}_{r} \left(91\right)\end{matrix}\end{matrix}$

Expression (92) is a wheel load estimation formula of the forklift truck 1A, which is expressed based on Expressions (90) and (91), a condition that the sum of wheel load fluctuations is zero, and Expression (33).
[Math. 51] $\begin{matrix}\left[\begin{matrix}{\left[{J}_{s}⋅{\dot{ω}}_{s}+{Ω}_{s}⋅{J}_{s}⋅{ω}_{s}\right]}_{Roll} - \left({M}_{s}⋅{S}_{yCGs}⋅{h}_{CGs}-{M}_{s}⋅{S}_{zCGs}⋅{d}_{s}+{M}_{u}⋅{S}_{yCGu \left(s\right)}⋅{h}_{CGu}\right) \\ {\left[{J}_{s}⋅{\dot{ω}}_{s}+{Ω}_{s}⋅{J}_{s}⋅{ω}_{s}\right]}_{pitch} - \left(-{M}_{s}⋅{S}_{xCGs}⋅{h}_{CGs}+{M}_{s}⋅{S}_{zCGs}⋅{c}_{s}-{M}_{u}⋅{S}_{xCGu \left(s\right)}⋅{h}_{CGu}-{M}_{u}⋅{S}_{zCGu \left(s\right)}⋅\left({c}_{p}+{c}_{u}\right)\right. \\ 0 \\ 0\end{matrix}\right] \\ = \left[\begin{matrix}{t}_{FL} & - {t}_{FR} & {t}_{RL} & - {t}_{RR} \\ - {l}_{f} & - {l}_{f} & {l}_{r} & {l}_{r} \\ 1 & 1 & 1 & 1 \\ {α}_{R} ⋅ {t}_{R} & - {α}_{R} ⋅ {t}_{R} & - {α}_{F} ⋅ {t}_{F} & {α}_{F} ⋅ {t}_{F}\end{matrix}\right] \left[\begin{matrix}Δ {FL}_{z _ s} \\ Δ {FR}_{z _ s} \\ Δ {RL}_{z _ u \left(s\right)} \\ Δ {RR}_{z _ u \left(s\right)}\end{matrix}\right]\end{matrix}$

Specifically, Expression (92) is expressed by Expression (90), which integrates roll motion of the sprung body 10 and roll motion of the unsprung body 20, Expression (91), which integrates pitch motion of the sprung body 10 and pitch motion of the unsprung body 20, a condition that the sum of wheel load fluctuations is zero, and Expression (33), which is a roll stiffness distribution expression relating to independent roll motion of the sprung body 10 and the unsprung body 20. In other words, Expression (92) (example of a predetermined estimation formula) is a formula for estimating the wheel loads based on integrating the motion of the sprung body 10 and the motion of the unsprung body 20 into the coordinate system of one of the inertia system of the sprung body 10 and the inertia system of the unsprung body 20. Specifically, the motion of the sprung body 10 and the motion of the unsprung body 20 are integrated based on the internal forces (spring force and lock cylinder hydraulic pressure Fcs) acting between the inertia system of the sprung body 10 and the inertia system of the unsprung body 20 and relative attitude angles between the sprung body 10 and the unsprung body 20. This allows the wheel loads of the forklift truck 1A (example of the vehicle 1) to be estimated by integrating behavior of two independent inertia systems in a coordinate system of one inertia system based on the internal force acting between the two independent inertia systems and the relative attitude angle between the two independent inertia systems.

Expressions (93) to (96) are expressions representing respective wheel loads, and are constituted by the sum of static loads and the above-described estimated values. $\begin{matrix}{FL}_{z _ s} = {FL}_{z 0} + Δ {FL}_{z _ s} \left(93\right) \\ {FR}_{z _ s} = {FR}_{z 0} + Δ {FR}_{z _ s} \left(94\right) \\ {RL}_{z _ s} = {RL}_{z 0} + Δ {RL}_{z _ u \left(s\right)} \left(95\right) \\ {RR}_{z _ s} = {RR}_{z 0} + Δ {RR}_{z _ u \left(s\right)} \left(96\right)\end{matrix}$

### 3. Functional configuration and information processing method

In the third section, a functional configuration and an information processing method of the vehicle control device 100 described above will be described.

### 3.1. Functional configuration

FIG. 26 is a functional block diagram of the vehicle control device 100 (controller 110) according to the present embodiment. Specifically, the vehicle control device 100 (controller 110) includes the acquisition unit 190, the computation unit 200, and the actuator controller 230.

The acquisition unit 190 acquires the motion information IFm based on output signals from the sensors 50. Specifically, the acquisition unit 190 includes a stop state acquisition unit 191, a load acquisition unit 192, a lift height acquisition unit 193, a sprung three-axis acceleration acquisition unit 194, a sprung three-axis angular velocity acquisition unit 195, an unsprung three-axis angular velocity acquisition unit 196, and an actuator pressure acquisition unit 197.

The stop state acquisition unit 191 acquires, as the motion information IFm, information that allows a stop state of the forklift truck 1A (example of the vehicle 1) to be determined. The information that allows the stop state to be determined is not limited as long as the stop state of the forklift truck 1A is determinable, and is, for example, vehicle velocity information of the forklift truck 1A, and position information of operation devices (shift lever, pedal, and the like) included in the forklift truck 1A.

The load acquisition unit 192 receives the detected values output from the pressure sensor 53 as the motion information IFm, and acquires a mass Mα of the load 19 loaded on the fork 18 by converting detected values indicating pressure into mass.

The lift height acquisition unit 193 receives the detected values output from the encoder 55, calculates the height of the fork 18 with respect to a reference position (for example, a lowermost portion) based on the rotation angle of the lifting hydraulic motor, which is indicated by the detected values, and acquires the height as a lift height (example of the motion information IFm).

The sprung three-axis acceleration acquisition unit 194 is configured to acquire, as the motion information IFm, the measured acceleration values in the three axial directions at the center-of-gravity position of the sprung body 10 among the detected values output from the IMU 51 disposed in the sprung body 10.

The sprung three-axis angular velocity acquisition unit 195 is configured to acquire, as the motion information IFm, the angular velocities about the three axes at the center-of-gravity position of the sprung body 10 among the detected values output from the IMU 51 disposed in the sprung body 10.

The unsprung three-axis angular velocity acquisition unit 196 is configured to acquire, as the motion information IFm, the angular velocities about the three axes at the center-of-gravity position of the unsprung body 20, which is the detected value output from the gyro sensor 52 disposed in the unsprung body 20.

The actuator pressure acquisition unit 197 is configured to receive the detected values output from the actuator sensor 54, and to acquire the lock cylinder hydraulic pressure Fcs, which is hydraulic pressure in the cylinder of the actuator 30, as the motion information IFm.

The computation unit 200 is configured to execute various kinds of information processing calculation relating to the vehicle control device 100, and includes the calculation unit 210 and the estimation unit 220.

The calculation unit 210 is configured to calculate calculated values IFvc by executing various calculations based on various kinds of information including the motion information IFm acquired by the acquisition unit 190. The calculation unit 210 includes a sprung attitude angle calculation unit 211, an unsprung attitude angle calculation unit 212, a sprung center-of-gravity acceleration calculation unit 213, an unsprung center-of-gravity acceleration calculation unit 214, a roll stiffness distribution calculation unit 215, and a static load calculation unit 216. Note that the calculation unit 210 preferably calculates the calculated values IFvc by using the measured values, detected values, and the like acquired for each sampling of the sensors 50 or at an optional frequency. In other words, the calculation unit 210 preferably continuously calculates the calculated values IFvc based on the continuously acquired motion information IFm.

The sprung attitude angle calculation unit 211 calculates a sprung attitude angle as a calculated value IFvc based on various kinds of information.

The unsprung attitude angle calculation unit 212 calculates an unsprung attitude angle as a calculated value IFvc based on various kinds of information.

The sprung center-of-gravity acceleration calculation unit 213 is configured to calculate acceleration at the center-of-gravity position of the sprung body 10 as a calculated value IFvc based on various kinds of information.

The unsprung center-of-gravity acceleration calculation unit 214 is configured to calculate acceleration at the center-of-gravity position of the unsprung body 20 as a calculated value IFvc based on various kinds of information.

The roll stiffness distribution calculation unit 215 is configured to calculate roll stiffness distribution as a calculated value IFvc based on various kinds of information.

The static load calculation unit 216 is configured to calculate static loads of respective wheels of the forklift truck 1A as calculated values IFvc based on various kinds of information.

The estimation unit 220 is configured to estimate the wheel loads of the forklift truck 1A by executing various calculations based on the calculated values IFvc of the calculation unit 210. The estimation unit 220 includes a wheel load fluctuation estimation unit 221 and a wheel load estimation unit 222.

The wheel load fluctuation estimation unit 221 is configured to calculate fluctuation amounts of respective wheel loads of the forklift truck 1A based on various kinds of information and to output the fluctuation amounts as estimation results.

The wheel load estimation unit 222 is configured to calculate the wheel loads of the forklift truck 1A based on various kinds of information and to output the wheel loads as estimation results.

The actuator controller 230 is configured to control the actuator 30 based on various kinds of information.

### 3.1. Information processing method

In this section, an information processing method of the vehicle control device 100 described above will be described with reference to drawings. The information processing method includes an estimation method (hereinafter also referred to as "wheel load estimation method") of estimating the wheel loads applied to the plurality of wheels included in the forklift truck 1A (example of the vehicle 1) and a method (hereinafter also referred to as "actuator control method") of controlling the actuator 30 based on the estimated wheel loads. Note that the order of processing may be changed as appropriate, a plurality of processes may be simultaneously executed, and some processes may be omitted.

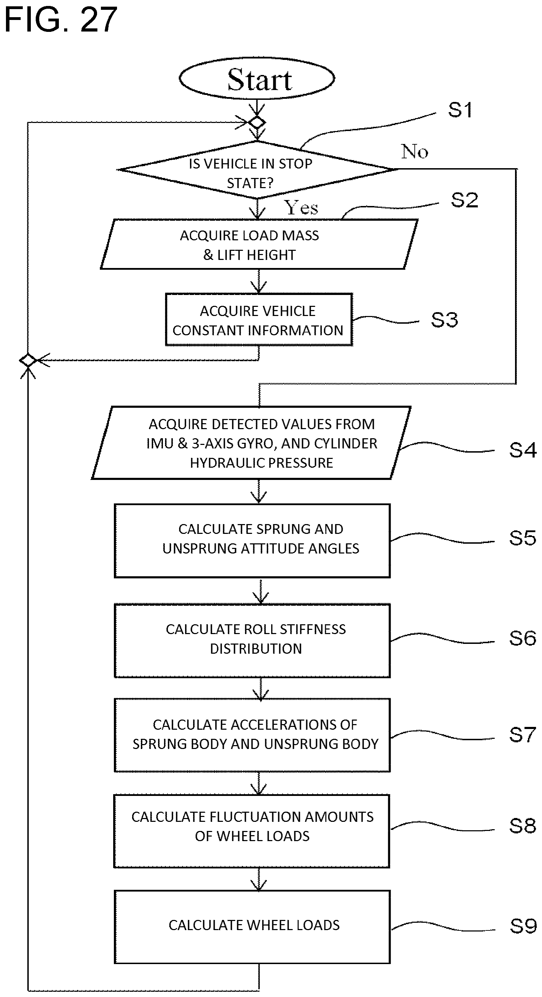

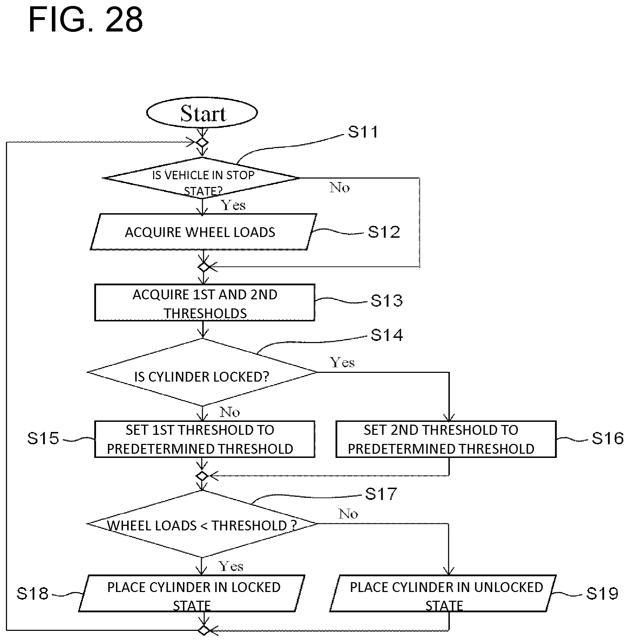

FIGS. 27 and 28 are examples of a processing of the vehicle control device 100. Specifically, FIG. 27 illustrates an example of a processing of the wheel load estimation method, and FIG. 28 illustrates an example of a processing of the actuator control method.

### 3.1. Wheel load estimation method

A flow of information processing of the wheel load estimation method will first be outlined below.

First, the stop state acquisition unit 191 acquires information that allows the stop state of the forklift truck 1A to be determined. Subsequently, the computation unit 200 determines whether the forklift truck 1A is in the stop state (step S1). Processing proceeds to step S2 when the forklift truck 1A is in the stop state, and processing proceeds to step S4 when the forklift truck 1A is not in the stop state.

When processing proceeds to step S2, the load acquisition unit 192 acquires the mass Mα of the load 19, and the lift height acquisition unit 193 acquires the lift height (step S2).

Subsequently, the acquisition unit 190 acquires vehicle constant information IFr1 (step S3). Thereafter, processing returns to step S1.

The vehicle constant information IFr1 is an example of reference information IFr, and stores various kinds of data relating to the forklift truck 1A. Specifically, the vehicle constant information IFr1 is information relating to the vehicle, which is set in advance corresponding to the forklift truck 1A, and the information relating to the vehicle includes, for example, vehicle constants (l_{c}, k_{f}, kᵣ, t_{R}, t_{F}, and the like).

When processing proceeds to step S4, the acquisition unit 190 acquires, as the motion information IFm, the detected values output from the IMU 51 disposed in the sprung body 10, the detected values output from the gyro sensor 52 disposed in the unsprung body 20, and the lock cylinder hydraulic pressure Fcs (step S4).

Specifically, the sprung three-axis acceleration acquisition unit 194 acquires the detected values output from the IMU 51 disposed in the sprung body 10. In addition, the sprung three-axis acceleration acquisition unit 194 acquires an x-axis-direction acceleration measured value S_{xGCs} at the center-of-gravity position of the sprung body 10 based on x-axis-direction acceleration of the sprung body 10, which is included in the acquired detected values. The sprung three-axis acceleration acquisition unit 194 acquires a y-axis-direction acceleration measured value S_{yGCs} at the center-of-gravity position of the sprung body 10 based on y-axis-direction acceleration of the sprung body 10, which is included in the acquired detected values. The sprung three-axis acceleration acquisition unit 194 acquires a z-axis-direction acceleration measured value S_{zGCs} at the center-of-gravity position of the sprung body 10 based on z-axis-direction acceleration of the sprung body 10, which is included in the acquired detected values.

The sprung three-axis angular velocity acquisition unit 195 acquires the detected values output from the IMU 51 disposed in the sprung body 10. In addition, the sprung three-axis angular velocity acquisition unit 195 acquires, x-axis angular velocity of the sprung body 10, which is included in the acquired detected values, as roll angular velocity Pₛ. The sprung three-axis angular velocity acquisition unit 195 acquires y-axis angular velocity of the sprung body 10, which is included in the acquired detected values, as pitch angular velocity Qs. The sprung three-axis angular velocity acquisition unit 195 acquires z-axis angular velocity of the sprung body 10, which is included in the acquired detected values, as yaw angular velocity Rs.

In other words, the motion information IFm preferably includes the acceleration of the sprung body 10 and at least one of the three-axis angular velocity and a three-axis angular acceleration of the sprung body 10. This allows the wheel loads to be accurately estimated by utilizing the detected values acquired by the IMU disposed in the sprung body 10. The acceleration of the sprung body 10 in this case is preferably the three-axis acceleration of the sprung body 10. This allows the wheel loads to be more accurately estimated by using accelerations in the three axial directions of the sprung body 10.

The unsprung three-axis angular velocity acquisition unit 196 acquires the detected values output from the gyro sensor 52 disposed in the unsprung body 20. In addition, the unsprung three-axis angular velocity acquisition unit 196 acquires x-axis angular velocity of the unsprung body 20, which is included in the acquired detected values, as roll angular velocity Pᵤ. The unsprung three-axis angular velocity acquisition unit 196 acquires y-axis angular velocity of the unsprung body 20, which is included in the acquired detected values, as pitch angular velocity Qᵤ. The unsprung three-axis angular velocity acquisition unit 196 acquires z-axis angular velocity of the unsprung body 20, which is included in the acquired detected values, as yaw angular velocity Rᵤ.

In other words, the motion information IFm preferably includes acceleration of the sprung body 10, at least one of the three-axis angular velocity and the three-axis angular acceleration of the sprung body 10, and at least one of the three-axis angular velocity and the three-axis angular acceleration of the unsprung body 20. This allows wheel loads to be even more accurately estimated by utilizing the detected values acquired by the IMU disposed in the sprung body 10 and the three-axis gyro sensor disposed in the unsprung body 20.

The actuator pressure acquisition unit 197 receives the detected values output from the actuator sensor 54, and acquires the lock cylinder hydraulic pressure Fcs, which is hydraulic pressure in the cylinder of the actuator 30.

The calculation unit 210 calculates a sprung attitude angle and an unsprung attitude angle based on the detected values acquired in processing of step S4 (step S5).

Specifically, the sprung attitude angle calculation unit 211 calculates a sprung attitude angle based on the angular velocity of the sprung body 10, which is acquired by the sprung three-axis angular velocity acquisition unit 195.

The unsprung attitude angle calculation unit 212 calculates an unsprung attitude angle based on angular velocity of the unsprung body 20, which is acquired by the unsprung three-axis angular velocity acquisition unit 196. Note that, in this case the calculation unit 210 may calculate a relative attitude angle between the sprung body 10 and the unsprung body 20 from the calculated sprung attitude angle and the calculated unsprung attitude angle.

The roll stiffness distribution calculation unit 215 calculates roll stiffness distributions α_{R} and α_{F} (step S6). Accordingly, the calculated values IFvc include roll stiffness distributions of the sprung body 10 and the unsprung body 20.

Specifically, the roll stiffness distribution calculation unit 215 calculates roll stiffness distributions based on the sprung attitude angle calculated by the sprung attitude angle calculation unit 211, the unsprung attitude angle calculated by the unsprung attitude angle calculation unit 212, the lock cylinder hydraulic pressure Fcs acquired by the actuator pressure acquisition unit 197, and the vehicle constant information IFr1. Specifically, the roll stiffness distribution calculation unit 215 calculates roll stiffness distributions α_{R} and α_{F} by using Expressions (34) and (35). In other words, roll stiffness distributions are calculated based on a relationship between a rotation moment acting on the sprung body 10 and a rotation moment acting on the unsprung body 20 in the roll direction. This allows the wheel loads to be more accurately estimated by using information of the relationship between the rotation moment acting on the sprung body 10 and the rotation moment acting on the unsprung body 20 in the roll direction.

The calculation unit 210 calculates acceleration at the center-of-gravity positions of the sprung body 10 and the unsprung body 20 (step S7). Accordingly, the calculated values IFvc include acceleration at the center-of-gravity positions of the sprung body 10 and the unsprung body 20.

Specifically, the sprung center-of-gravity acceleration calculation unit 213 calculates acceleration at the center-of-gravity position of the sprung body 10 based on the acceleration of the sprung body 10, which is acquired by the sprung three-axis acceleration acquisition unit 194, and the vehicle constant information IFr1. Specifically, the sprung center-of-gravity acceleration calculation unit 213 calculates sprung center-of-gravity accelerations G_{xCGs}, G_{yCGs}, and G_{zCGs} in respective axial directions of Σₛ, which are accelerations at the center-of-gravity position of the sprung body 10, by using Expressions (42) to (44).

The unsprung center-of-gravity acceleration calculation unit 214 calculates acceleration at the center-of-gravity position of the unsprung body 20 based on the acceleration of the sprung body 10, which is acquired by the sprung three-axis acceleration acquisition unit 194, the angular velocity of the sprung body 10, which is acquired by the sprung three-axis angular velocity acquisition unit 195, the angular velocity of the unsprung body 20, which is acquired by the unsprung three-axis angular velocity acquisition unit 196, and the vehicle constant information IFr1. Specifically, the unsprung center-of-gravity acceleration calculation unit 214 calculates unsprung center-of-gravity accelerations G_{xCGu(s)}, G_{yCGu(s)}, and G_{zCGu(s)} in respective axial directions of Σᵤ with respect to Σₑ as viewed from Σₛ, which are accelerations at the center-of-gravity position of the unsprung body 20, by using Expressions (61) to (63).

In this manner, the calculation unit 210 calculates the calculated values IFvc based on the motion information IFm (as an example, measured values at the IMU 51 and measured values of the relative roll angle (φₛᵤ) acquired by the sensors 50, and the like. In addition, center-of-gravity accelerations of the sprung body 10 and the unsprung body 20 are calculated based on translational motion and rotational motion of the forklift truck 1A (example of the vehicle 1). This allows the wheel loads to be more accurately estimated by using information of translational motion and rotational motion of the sprung body 10 and the unsprung body 20.

The wheel load fluctuation estimation unit 221 calculates fluctuation amounts ΔFL_{z_s}, ΔFR_{z_s}, ΔRL_{z_u(s)}, and ΔRR_{z_u(s)} of respective wheel loads of the forklift truck 1A, and outputs the fluctuation amounts as estimation results (step S8).

Specifically, by using Expression (92), the wheel load fluctuation estimation unit 221 calculates fluctuation amounts ΔFL_{z_s}, ΔFR_{z_s}, ΔRL_{z_u(s)}, and ΔRR_{z_u(s)} of respective wheel loads of the forklift truck 1A based on the sprung center-of-gravity accelerations, the unsprung center-of-gravity accelerations, and the roll stiffness distributions among the calculated values IFvc, and outputs the fluctuation amounts as estimation results.

In addition, the static load calculation unit 216 calculates static loads FL_{z0}, FR_{z0}, RL_{z0}, and RR_{z0} of respective wheels of the forklift truck 1A.

Specifically, the static load calculation unit 216 calculates static loads FL_{z0}, FR_{z0}, RL_{z0}, and RR_{z0} of respective wheels of the forklift truck 1A based on the information that allows the stop state to be determined, which is acquired by the stop state acquisition unit 191, the mass Mα of the load 19, which is acquired by the load acquisition unit 192, the lift height acquired by the lift height acquisition unit 193, and the vehicle constant information IFr1.

Subsequently, the wheel load estimation unit 222 estimates the wheel loads of the plurality of wheels based on the calculated values IFvc and Expressions (92) to (96), which are predetermined estimation formulae. In other words, the wheel load estimation unit 222 calculates the wheel loads FL_{z_s}, FR_{z_s}, RL_{z_s}, and RR_{z_s} of the forklift truck 1A, and outputs the wheel loads as estimation results (step S9). This allows the wheel loads of the forklift truck 1A, which has two independent inertia systems each having a roll angle, to be estimated. Furthermore, in other words, the estimation unit 220 estimates the wheel loads by executing computational processing based on an estimation method. This allows the wheel loads of the forklift truck 1A to be estimated by using the vehicle control device 100.

It is preferable that processing of steps S1 to S9 is continuously executed while the forklift truck 1A is in operation. In other words, it is preferable that the wheel loads are continuously estimated in a time series based on the calculated values IFvc continuously calculated and predetermined estimation formulae. This allows the wheel loads to be continuously estimated in a time series.

Specifically, the wheel load estimation unit 222 calculates the wheel loads of the forklift truck 1A based on the static loads of respective wheels of the forklift truck 1A, which are calculated by the static load calculation unit 216, and the fluctuation amounts of respective wheel loads of the forklift truck 1A, which are estimated by the wheel load fluctuation estimation unit 221, and outputs the wheel loads as estimation results. Specifically, the wheel load estimation unit 222 calculates the wheel loads FL_{z_s}, FR_{z_s}, RL_{z_s}, and RR_{z_s} of the forklift truck 1A by using Expressions (93) to (96), and outputs the wheel loads as estimation results.

### 3.2. Actuator control method

Subsequently, a flow of information processing of the actuator control method will be outlined below.

First, the stop state acquisition unit 191 acquires information that allows the stop state of the forklift truck 1A to be determined. Subsequently, the computation unit 200 determines whether the forklift truck 1A is in the stop state (step S11). Processing proceeds to step S12 when the forklift truck 1A is in the stop state, and processing proceeds to step S13 when the forklift truck 1A is not in the stop state.

When processing proceeds to step S12, the acquisition unit 190 acquires the wheel loads FL_{z_s}, FR_{z_s}, RL_{z_s}, and RR_{z_s} of the forklift truck 1A, which are estimated by the estimation unit 220 (step S12). Thereafter, processing proceeds to step S13.

When processing proceeds to step S13, the acquisition unit 190 acquires a first threshold IFr21 and a second threshold IFr22, which serve as predetermined thresholds, by acquiring threshold information IFr2 (step S13).

The threshold information IFr2 is an example of the reference information IFr, and is information relating to thresholds used to control the actuator 30. Note that the reference information IFr includes at least the vehicle constant information IFr1 and the threshold information IFr2.

Subsequently, the computation unit 200 determines whether the cylinder of the actuator 30 is locked (step S14). Specifically, the computation unit 200 determines whether the cylinder of the actuator 30 is locked based on a control state by the actuator controller 230. Note that the computation unit 200 may determine whether the cylinder of the actuator 30 is locked based on the value of the lock cylinder hydraulic pressure Fcs in addition to or in place of the control state by the actuator controller 230. Processing proceeds to step S15 when the cylinder of the actuator 30 is not locked, and processing proceeds to step S16 when the cylinder of the actuator 30 is locked.

When processing proceeds to step S15, the computation unit 200 executes processing of setting the first threshold IFr21 (example of the threshold information IFr2) acquired at step S13 to the predetermined threshold. Thereafter, processing proceeds to step S17.

The first threshold IFr21 in this case is a threshold set to lock the cylinder of the actuator 30, and is set in advance in accordance with the configuration of the forklift truck 1A. Specifically, the first threshold IFr21 may be set in accordance with static loads of the forklift truck 1A, and is, for example, 10% to 50% of the static loads, preferably, 15% to 40% of the static loads, and more preferably, 20% to 30% of the static loads. Specifically, for example, the first threshold IFr21 is 10%, 12%, 14%, 16%, 18%, 20%, 22%, 24%, 26%, 28%, 30%, 32%, 34%, 36%, 38%, 40%, 42%, 44%, 46%, 48%, or 50% of the static loads, and may be within a range between any two of the numerical values exemplified here.

When processing proceeds to step S16, the computation unit 200 executes processing of setting the second threshold IFr22 (example of the threshold information IFr2) acquired at step S13 to the predetermined threshold. Thereafter, processing proceeds to step S17.

The second threshold IFr22 in this case is a threshold set to lock the cylinder of the actuator 30, and is set in advance in accordance with the first threshold IFr21 and the configuration of the forklift truck 1A. Specifically, the second threshold IFr22 may be set to a value greater than the first threshold IFr21 so that the second threshold IFr22 has an optional difference (hysteresis width) from the first threshold IFr21, and for example, may be set by multiplying the first threshold IFr21 by a predetermined coefficient. The predetermined coefficient is, for example, 1% to 15%, preferably 2% to 10%, and more preferably 2% to 5%. Specifically, the predetermined coefficient is, for example, 1%, 2%, 3%, 4%, 5%, 6%, 7%, 8%, 9%, 10%, 11%, 12%, 13%, 14%, or 15%, and may be within a range between any two of the numerical values exemplified here.

When processing proceeds to step S17, the computation unit 200 determines whether the wheel loads are less than a threshold (step S17). Specifically, the computation unit 200 determines whether the acquired wheel loads are less than a set threshold (the first threshold IFr21 or the second threshold IFr22). Processing proceeds to step S18 when the wheel loads are less than the threshold, and processing proceeds to step S19 when the wheel loads are not less than the threshold.

When processing proceeds to step S18, the actuator controller 230 controls the solenoid valve 32 of the actuator 30 so that the cylinder of the actuator 30 is placed in a locked state or maintained in the locked state. Thereafter, processing returns to step S11.

When processing proceeds to step S19, the actuator controller 230 controls the solenoid valve 32 of the actuator 30 so that the cylinder of the actuator 30 is placed in an unlocked state or maintain in the unlocked state. Thereafter, processing returns to step S11.

Processing of steps S14 to S19 is summarized as follows. The actuator controller 230 controls so that the cylinder is placed in the locked state when the estimated wheel loads are less than the first threshold IFr21. Thereafter, the actuator controller 230 controls so that the cylinder is maintained in the locked state until the wheel loads recover. On the other hand, the actuator controller 230 controls so that the cylinder is placed in the unlocked state when the wheel loads recover and become equal to or greater than the second threshold IFr22. In this case, since the second threshold IFr22 is a value greater than the first threshold IFr21 by an optional difference, switching between the locked state and the unlocked state of the cylinder is performed in accordance with the optional difference. This eliminates or minimizes unnecessary operation of the solenoid valve 32 of the actuator 30, thereby improving stability of the forklift truck 1A. Note that switching between the first threshold IFr21 and the second threshold IFr22 is performed when the cylinder is placed in the locked state and when the cylinder is placed in the unlocked state, and switching is performed from the first threshold IFr21 to the second threshold IFr22 when the cylinder is placed in the locked state, whereas switching is performed from the second threshold IFr22 to the first threshold IFr21 when the cylinder is placed in the unlocked state.

Information processing of the actuator control method is summarized as follows. The actuator controller 230 controls the actuator 30 based on the wheel loads output from the wheel load estimation unit 222 and the threshold information IFr2. In other words, the actuator controller 230 controls the actuator 30 based on the estimated wheel loads. This allows stability and workability of the forklift truck 1A to be both achieved by the vehicle control device 100.

The actuator controller 230 further controls the actuator 30 based on the estimated wheel loads and the threshold information IFr2 (example of predetermined thresholds). This allows the actuator 30 to be controlled in accordance with the state of wheel loads. The actuator controller 230 also controls the actuator 30 so that the rotations in the roll direction is restricted when the estimated wheel loads are less than the first threshold IFr21 (example of predetermined thresholds). This allows the forklift truck 1A to be kept in a stable state at all times. Then, the actuator controller 230 controls the actuator 30 so that the restriction on the rotations in the roll direction is released when the estimated wheel loads changes from being less than the first threshold IFr21 to being equal to or greater than the second threshold IFr22. This allows stability and workability of the forklift truck 1A are both maintained.

### 4. Experimental example

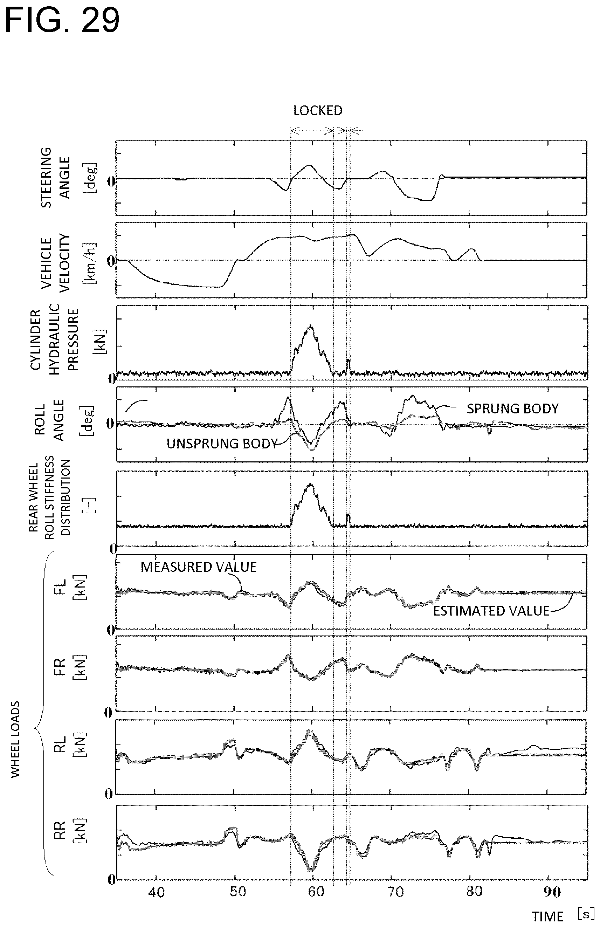

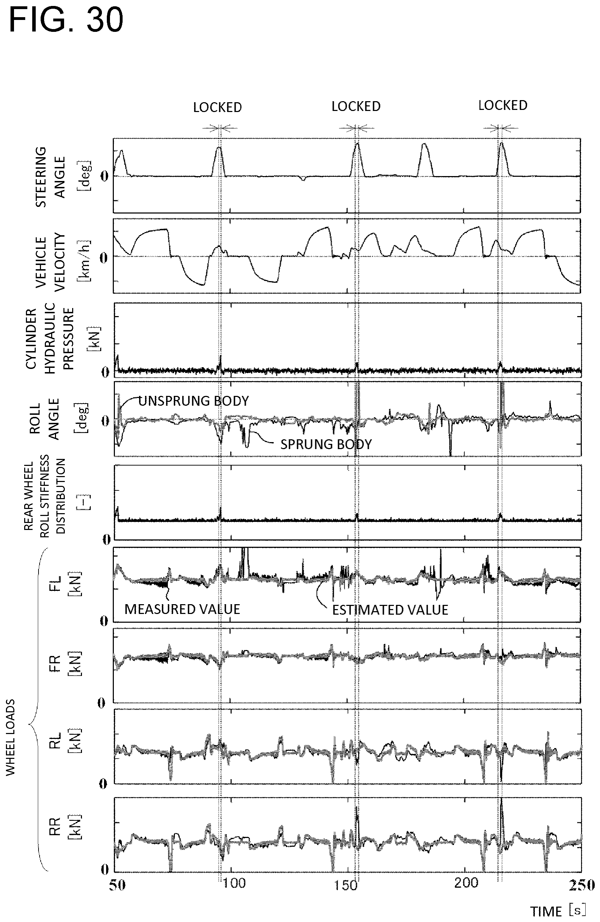

FIG. 29 is a graph illustrating various measured values and estimated values of wheel loads when the forklift truck 1A travels with a load of about 50% of a maximum load capacity. FIG. 30 is a graph illustrating various measured values and estimated values of the wheel loads when the forklift truck 1A travels with a load of 90% or more of the maximum load capacity.

In FIGS. 29 and 30, as for the wheel loads of the forklift truck 1A, estimated values estimated by Expressions (93) to (96) are compared with measured values obtained by measuring the wheel loads. As illustrated in FIGS. 29 and 30, the estimated values of the wheel loads substantially match with the measured values irrespective of loads, and thus the wheel loads were accurately estimated.

FIGS. 29 and 30 further indicate that the actuator 30 was controlled based on the estimated wheel loads and predetermined thresholds. As illustrated in FIGS. 29 and 30, the actuator 30 was controlled to restrict rotations in the roll direction when the estimated wheel loads were less than the predetermined thresholds. Moreover, the actuator 30 was controlled to release the restriction on the rotations in the roll direction when the estimated wheel loads changed from being less than the first threshold IFr21 to being equal to or greater than the second threshold IFr22.

Although each embodiment of the present invention is described above, the present invention is not limited thereto and may be modified as appropriate without departing from the technical idea of the invention.

### 5. Other

The vehicle 1 according to the embodiment may be implemented in the following aspects.

In the above embodiment, a case where the vehicle 1 is the forklift truck 1A (cargo handling vehicle) is described as an example, but the present invention is not limited thereto. The vehicle 1 of the embodiment may be a vehicle including a sprung body and an unsprung body that are connected so as to be roll-rotatable by a support unit as in the vehicle 1 of the embodiment. A cargo handling vehicle other than a forklift truck, or an optional vehicle other than a cargo handling vehicle may be employed.

The above embodiment may be implemented as a distributable program. Specifically, the program causes at least one computer to execute steps of the vehicle control device 100. This allows the wheel loads of the vehicle 1, which has two independent inertia systems each having a roll angle, to be estimated through information processing by the program.

The controller 110 performs write processing (storage processing) and read processing to and from the storage 120 for various kinds of data and various kinds of information, but the present invention is not limited thereto, and for example, information processing of each step may be executed by using registers, cache memories, and the like in the controller 110.

In the present embodiment, a case where the vehicle control device 100 is mounted on the vehicle 1 is described above, but the present invention is not limited thereto, and the vehicle control device 100 may be configured as an external device. In this case, the vehicle 1 may include a communication unit that transmits the detected values of the IMU 51, the gyro sensor 52, the pressure sensor 53, the actuator sensor 54, the encoder 55, and the operation amount sensor 56 to the vehicle control device 100, and the vehicle control device 100 configured as an external device may acquire various kinds of information transmitted from the communication unit of the vehicle 1, and may estimate the wheel loads and control the actuator 30 through processing similar to that of the above-described embodiment.

The present invention may be provided in the following aspects.
(1) An estimation method of estimating wheel loads applied to a plurality of wheels of a vehicle, the vehicle including a sprung body, an unsprung body, a support unit, an actuator, and a sensor, the sprung body including a vehicle body and a first wheel, the unsprung body including an axle and a second wheel, the vehicle body and the axle being supported by the support unit so as to be rotatable in a roll direction of the vehicle, the actuator being configured to restrict rotations of the vehicle body and the axle in the roll direction, the sensor being configured to acquire motion information relating to motion of the vehicle, the estimation method comprising: calculating calculated values based on the acquired motion information, the calculated values including accelerations at respective center-of-gravity positions of the sprung body and the unsprung body, and roll stiffness distributions of the sprung body and the unsprung body; and estimating the wheel loads of the plurality of wheels based on the calculated values and a predetermined estimation formula.

According to this aspect, it is possible to estimate the wheel loads of the vehicle, which has two independent inertia systems each having a roll angle.

(2) In the estimation method according to (1) described above, the predetermined estimation formula is a formula for estimating the wheel loads based on integrating motion of the sprung body and motion of the unsprung body in a coordinate system of one of an inertia system of the sprung body and an inertia system of the unsprung body, and the motion of the sprung body and the motion of the unsprung body are integrated based on an internal force acting between the inertia system of the sprung body and the inertia system of the unsprung body, and a relative attitude angle between the sprung body and the unsprung body.

According to this aspect, it is possible to estimate the wheel loads of the vehicle by integrating behavior of the two independent inertia systems in a coordinate system of the one of the inertia systems based on the internal force acting between the two independent inertia systems and the relative attitude angle between the two independent inertia systems.

(3) In the estimation method according to (1) or (2) described above, the motion information includes the acceleration of the sprung body, and at least one of a three-axis angular velocity and a three-axis angular acceleration of the sprung body.

According to this aspect, it is possible to accurately estimate the wheel loads by utilizing the detected values acquired by the IMU disposed on the sprung body.

(4) In the estimation method according to (3) described above, the acceleration of the sprung body is a three-axis acceleration of the sprung body.

According to this aspect, it is possible to more accurately estimate the wheel loads by using the three-axis acceleration of the sprung body.

(5) In the estimation method according to any one of (1) to (4) described above, the motion information includes the acceleration of the sprung body, at least one of a three-axis angular velocity and a three-axis angular acceleration of the sprung body, and at least one of a three-axis angular velocity and a three-axis angular acceleration of the unsprung body.

According to this aspect, it is possible to even more accurately estimate the wheel loads by utilizing the detected values acquired by the IMU disposed on the sprung body and the three-axis gyro sensor disposed on the unsprung body.

(6) In the estimation method according to any one of (1) to (5) described above, the accelerations at the respective center-of-gravity positions of the sprung body and the unsprung body are calculated based on translational motion and rotational motion of the vehicle.

According to this aspect, it is possible to more accurately estimate the wheel loads by using the information of translational motion and rotational motion of each of the sprung body and the unsprung body.

(7) In the estimation method according to any one of (1) to (6) described above, the roll stiffness distribution are calculated based on a relationship between a rotation moment acting on the sprung body and a rotation moment acting on the unsprung body in the roll direction.

According to this aspect, it is possible to more accurately estimate the wheel loads by using the information of the relationship between the rotation moment acting on the sprung body and the rotation moment acting on the unsprung body in the roll direction.

(8) In the estimation method according to any one of (1) to (7) described above, the sensor is configured to continuously acquire the motion information, the calculated values are continuously calculated based on the continuously acquired motion information, and the wheel loads are continuously estimated in a time series based on the continuously calculated values and the predetermined estimation formula.

According to this aspect, it is possible to continuously estimate the wheel loads in a time series.

(9) A vehicle control device comprising at least one processor, the processor being configured to execute processing by reading a program, the processing including estimating the wheel loads by executing computational processing based on the estimation method according to any one of (1) to (8) described above.

According to this aspect, it is possible to estimate the wheel loads of the vehicle by using the vehicle control device.

(10) In the vehicle control device according to (9) described above, the processing further include controlling the actuator based on the wheel loads estimated.

According to this aspect, it is possible to further achieve both stability and workability of the vehicle by using the vehicle control device.

(11) In the vehicle control device according to (10) described above, the actuator is controlled based on the wheel loads estimated and a predetermined threshold.

According to this aspect, it is possible to control the actuator in accordance with a state of wheel loads.

(12) In the vehicle control device according to (10) or (11) described above, the actuator is controlled to restrict rotations of a vehicle body and an axle in the roll direction when the wheel loads estimated are less than a predetermined threshold.

According to this aspect, it is possible to keep the vehicle in a stable state at all times.

(13) In the vehicle control device according to any one of (10) to (12) described above, the actuator is controlled to release the restriction on the rotations in the roll direction when the wheel loads estimated changes from being less than a first threshold as the predetermined threshold to being equal to or greater than a second threshold as the predetermined threshold.

According to this aspect, it is possible to achieve both maintenance of stability of the vehicle and workability.

(14) A vehicle comprising the vehicle control device according to any one of (9) to (13) described above.

According to this aspect, it is possible to maintain stability of the vehicle by using the vehicle control device.

(15) The vehicle according to (14) described above further includes a fork, and the vehicle is a forklift truck.

According to this aspect, it is possible to suitably implement the vehicle control device in the forklift truck.

(16) A program that causes a computer to execute each of the processing of the vehicle control device according to any one of (9) to (13) described above.

According to this aspect, it is possible to estimate the wheel loads in a vehicle that has two independent inertia systems, each having a roll angle, through information processing by the program.

The present invention is not limited to this.

Although various embodiments according to the present invention are described above, these are presented as examples and are not intended to limit the scope of the invention. The novel embodiments may be implemented in other various forms, and may be subjected to various kinds of omission, substitution, and modification without departing from the gist of the invention. The embodiments and modifications are included in the scope and gist of the invention, and are also included in the invention described in the claims and equivalents thereof.

## Claims

1. An estimation method of estimating wheel loads applied to a plurality of wheels (14, 24) of a vehicle (1, 1A), the vehicle (1, 1A) including a sprung body (10), an unsprung body (20), a support unit (40), an actuator (30), and a sensor (50), the sprung body (10) including a vehicle body (11) and a first wheel (14) of the wheels (14, 24), the unsprung body (20) including an axle (25) and a second wheel (24) of the wheels (14, 24), the vehicle body (11) and the axle (25) being supported by the support unit (40) so as to be rotatable in a roll direction of the vehicle (1, 1A), the actuator (30) being configured to restrict rotations of the vehicle body (11) and the axle (25) in the roll direction, the sensor (50) being configured to acquire motion information (IFm) relating to motion of the vehicle (1, 1A), the estimation method comprising:
calculating calculated values (IFvc) based on the acquired motion information (IFm), the calculated values (IFvc) including accelerations at respective center-of-gravity positions of the sprung body (10) and the unsprung body (20), and roll stiffness distributions of the sprung body (10) and the unsprung body (20); and
estimating the wheel loads of the wheels (14, 24) based on the calculated values (IFvc) and a predetermined estimation formula.

2. The estimation method according to claim 1, **characterized in that**
the predetermined estimation formula is a formula for estimating the wheel loads based on integrating motion of the sprung body (10) and motion of the unsprung body (20) in a coordinate system of one of an inertia system of the sprung body (10) and an inertia system of the unsprung body (20), and
the motion of the sprung body (10) and the motion of the unsprung body (20) are integrated based on an internal force acting between the inertia system of the sprung body (10) and the inertia system of the unsprung body (20), and a relative attitude angle between the sprung body (10) and the unsprung body (20).

3. The estimation method according to claim 1 or 2, **characterized in that** the motion information (IFm) includes the acceleration of the sprung body (10), and at least one of a three-axis angular velocity and a three-axis angular acceleration of the sprung body (10).

4. The estimation method according to claim 3, **characterized in that**
the acceleration of the sprung body (10) is a three-axis acceleration of the sprung body (10).

5. The estimation method according to any one of claims 1 to 4, **characterized in that**
the motion information (IFm) includes the acceleration of the sprung body (10), at least one of a three-axis angular velocity and a three-axis angular acceleration of the sprung body (10), and at least one of a three-axis angular velocity and a three-axis angular acceleration of the unsprung body (20).

6. The estimation method according to any one of claims 1 to 5, **characterized in that**
the accelerations at the respective center-of-gravity positions of the sprung body (10) and the unsprung body (20) are calculated based on translational motion and rotational motion of the vehicle (1, 1A).

7. The estimation method according to any one of claims 1 to 6, **characterized in that**
the roll stiffness distributions are calculated based on a relationship between a rotation moment acting on the sprung body (10) and a rotation moment acting on the unsprung body (20) in the roll direction.

8. The estimation method according to any one of claims 1 to 7, **characterized in that**
the sensor (50) is configured to continuously acquire the motion information (IFm),
the calculated values (IFvc) are continuously calculated based on the continuously acquired motion information (IFm), and
the wheel loads are continuously estimated in a time series based on the continuously calculated values (IFvc) and the predetermined estimation formula.

9. A vehicle control device (100) comprising at least one processor (110), the processor (110) being configured to execute processing (S1-S19) by reading a program, the processing (S1-S19) including estimating the wheel loads by executing computational processing based on the estimation method according to any one of claims 1 to 8.

10. The vehicle control device (100) according to claim 9, **characterized in that**
the processing (S1-S19) further includes controlling the actuator (30) based on the wheel loads estimated.

11. The vehicle control device (100) according to claim 10, **characterized in that**,
the actuator (30) is controlled based on the wheel loads estimated and a predetermined threshold.

12. The vehicle control device (100) according to claim 10 or 11, **characterized in that**
the actuator (30) is controlled to restrict the rotations in the roll direction when the wheel loads estimated are less than a predetermined threshold (IFr21, IFr22).

13. The vehicle control device (100) according to any one of claims 10 to 12, **characterized in that**
the actuator (30) is controlled to release the restriction on the rotations in the roll direction when the wheel loads estimated changes from being less than a first threshold (IFr21) as the predetermined threshold (IFr21, IFr22) to being equal to or greater than a second threshold (IFr22) as the predetermined threshold (IFr21, IFr22).

14. A vehicle (1, 1A) comprising the vehicle control device (100) according to any one of claims 9 to 13.

15. The vehicle (1, 1A) according to claim 14, **characterized in that**
the vehicle (1, 1A) includes a fork (18), and
the vehicle (1, 1A) is a forklift truck (1A).

16. A program causing a computer to execute processing (S1-S19) of the vehicle control device (100) according to any one of claims 9 to 13.
